# EUROPÄISCHE PATENTSCHRIFT

(11) **EP 2 817 194 B1**
(45) Veröffentlichungstag und Bekanntmachung des Hinweises auf die Patenterteilung: **11.10.2017**
(21) Anmeldenummer: 13709159.1
(22) Anmeldetag: 20.02.2013
(51) Int. Cl.: B62B 3/12, F16H 55/18

(54) **ZAHNSTANGEN-LENKGETRIEBE MIT PROGRESSIVER LENKWINKELVERKÜRZUNG**
GEAR RACK STEERING GEAR HAVING A PROGRESSIVE REDUCTION
DIRECTION À CRÉMAILLÈRE CARACTÉRISÉE PAR UNE RÉDUCTION PROGRESSIVE DE L'ANGLE DE BRAQUAGE

(30) Priorität: 20.02.2012 EP 12156225
(43) Veröffentlichungstag der Anmeldung: 31.12.2014
(73) Patentinhaber: SchmitterGroup AG, 97289 Thüngen (DE)
(72) Erfinder: GÜNTHER, Friedhelm, 44359 Dortmund (DE); SCHMIDT, Marco, Thüngen 97289 (DE); DIRSCHERL, Ralf, 97289 Thüngen (DE)
(74) Vertreter: Götz, Georg Alois
(86) Internationale Anmeldenummer: PCT/EP2013/053365
(87) Internationale Veröffentlichungsnummer: WO 2013/124308

(56) Entgegenhaltungen:
- DE-A1- 19 508 708
- DE-C- 707 505
- US-A- 6 000 491

## Beschreibung

Die Erfindung betrifft ein Kraftfahrzeug-Lenkgetriebe gemäß Oberbegriff des Anspruchs 1. Dabei umfasst die darin genannte Führung, die parallel zu einer von der Ritzelverzahnung gebildeten Stirnfläche verläuft, auch die Führung in einer radialen Richtung der Ritzelverzahnung, wenn diese sich in einer Ausgangs-Drehstellung entsprechend der Drehstellung des Lenkrads für Geradeausfahrt befindet.

Aus der DE 195 08 708 A1 ist ein Lenksystem mit variablem Lenkwinkelverhältnis bekannt. Die Eingangswelle ist von einem Tragelement drehend gehalten, das wiederum von einem 2-teiligen Gehäuse drehend gehalten ist. Die Axiallinien des Tragelements und des Gehäuses verlaufen zueinander parallel und sind voneinander versetzt. Durch stufenloses Ändern einer Exzentrizität der axialen Mitte der Eingangswelle relativ zu der axialen Mitte einer Ausgangswelle ist es möglich, das Verhältnis des Drehwinkel der Ausgangswelle zu dem Drehwinkel der Eingangswelle oder das praktische Lenkübersetzungsverhältnis stufenlos zu ändern. Dadurch soll die Handhabung des Fahrzeugs beispielsweise beim Parken des Fahrzeugs in einen engen Raum verbessert, in einem Niedergeschwindigkeitsbereich das Fahrzeug mit geringstmöglicher Mühe gelenkt, und in einem Hochgeschwindigkeitsbereich die Stabilität des Fahrzeugs zu verbessert werden können. Dies soll sich mit einer besonders einfachen und spielfreien Struktur erzielen lassen.

Lenkgetriebe der anfangs genannten Art sind aus der Patentschrift DE 707 505 "Zahnstangenlenkung für Kraftfahrzeuge" bekannt. Das mit der Zahnstange kämmende Antriebsritzel wird über einen stirnseitig exzentrisch angedrehten Antriebszapfen in Drehung versetzt. Der exzentrische Antriebszapfen ist in einer Lagerbüchse drehend gelagert, die in einem Kulissenstein aufgenommen ist. Dieser ist zum Vollzug von durch die exzentrische Anbringung des Antriebszapfens bedingte Ausgleichsbewegungen linear bzw. translatorisch geführt. Allerdings ist bei dieser vorbekannten Konstruktion nicht ausreichend dafür Sorge getragen, dass ein stabiler Eingriff zwischen dem Antriebsritzel und der Zahnstange insbesondere auch bei externen Stößen, z. B. beim Einparken des zu lenkenden Fahrzeugs, bestehen bleibt.

Der Erfindung liegt die Aufgabe zugrunde, bei einem Lenkgetriebe mit exzentrisch angetriebenem Antriebsritzel die Zuverlässigkeit des Eingriffs zwischen der Zahnstange und der Ritzelverzahnung zu erhöhen. Zur Lösung wird auf das im Anspruch 1 angegebene Kraftfahrzeug-Lenkgetriebe verwiesen. Vorteilhafte, optionale Ausbildungen dieser Erfindung ergeben sich aus den abhängigen Ansprüchen.

Demnach liegt es im Rahmen der Erfindung, zusätzliche Haltemittel für den Zahnstangen-/Ritzeleingriff vorzusehen. Diese können einerseits beim Antriebsritzel mit einem oder mehreren Haltevorsprüngen, insbesondere Gleitzapfen, und andererseits mit einem separaten Gleit- oder Haltestück realisiert sein. So können beispielsweise Haltevorsprünge bzw. Gleitzapfen beidseitig an je einer Stirnseite des Antriebsritzels angebracht sein (vgl. Patentanspruch 4). Das Haltestück, beispielsweise ein entlang oder an einer Gehäuseinnenseite hin- und herverfahrbares Gleitstück, ist zweckmäßig als loses, separat hergestelltes Teil realisiert. In weiterer Ausgestaltung weist es eine U-artige Grundform auf, wobei die U-Schenkel das Antriebsritzel an seinen beiden Stirnseiten zumindest teilweise überdecken. Die Stirnkanten der U-Schenkel sind zweckmäßig konkav ausgewölbt, so dass ein formschlüssiges "Reiten" der U-Schenkel auf den stirnseitigen Haltevorsprüngen des Antriebsritzels möglich ist. In diesem Sinne besteht eine optionale Erfindungsausbildung darin, dass das Haltestück als loses separat hergestelltes Gleitstück vorzugsweise mit U-artiger Grundform zum stirnseitigen Umgeben des Antriebsritzels mit U-artigen Schenkeln ausgeführt ist, wobei ein oder zwei Schenkel des U-artigen Gleitstücks zum vorzugsweise formschlüssigen Gleiten auf je einem Haltevorsprung vorzugsweise mit je einer konkav gewölbten Schenkel-Stirnkante ausgebildet sind, wobei die Konkavität komplementär zum Haltevorsprung gestaltet ist (vergleiche Patentanspruch 5). In dieser Hinsicht ist es vorteilhaft, jede Stirnseite des Antriebsritzels mit einem Haltevorsprung zu versehen, so dass Haltekräfte gleichmäßig verteilt auf das Antriebsritzel drücken, was sich vorteilhaft auf die Stabilität des Ritzel-/Zahnstangeneingriffs auswirkt (vgl. Patentanspruch 4).

Auf seiner Außenseite ist das Haltestück zweckmäßig mit einer Gleitfläche versehen, so dass es an einer Gehäuseinnenseite gleitend Ausgleichshübe ausführen kann. Entsprechend besteht eine optionale Erfindungsausbildung darin, dass das Getriebegehäuse auf seiner dem Haltestück gegenüberliegenden Innenseite einen Gegenhalteabschnitt, der insbesondere als Gleitfläche ausgebildet ist, zur Parallelführung des Haltestücks aufweist (siehe Patentanspruch 2). In diesem Zusammenhang ist es von Vorteil, das Getriebegehäuse mit einem lose, separat hergestellten Gehäusedeckel zu realisieren, an dessen Innenseite die Gleitfläche für die Ausgleichshübe des Haltestücks ausgebildet sind. Vorzugsweise liegt der innenseitige Gegenhalteabschnitt, insbesondere die Gleitfläche, gegenüber der Deckelgrundfläche nach innen versetzt (siehe Patentanspruch 3). Mit der Ausbildung eines abnehmbaren Gehäusedeckels wird gleichzeitig die Wartbarkeit des Lenkgetriebes verbessert, weil der Gehäusedeckel für Wartungszwecke am Zahnstangen-/Ritzeleingriff abnehmbar ist.

Ein mit der Erfindung erzielbarer Vorteil besteht darin, dass zahlreiche, sich bei Lenkgetrieben eingebürgerte Standardteile bzw. -elemente wie z. B. Schrägverzahnung usw. weiter verwendbar sind. Insbesondere kann gemäß einer optionalen Erfindungsausbildung mit der an sich bekannten Schiebemuffe, in der die Lenkspindel teleskopartig aufgenommen ist, gegebenenfalls über ein Kreuzgelenk der durch den exzentrischen Antrieb bedingte Ausgleichshub aufgefangen bzw. kompensiert werden, so dass für die Lenkrad-Bedienperson die mit dem exzentrischen Ritzelantrieb einhergehenden Ausgleichshübe praktisch nicht spürbar werden.

Im Rahmen der Erfindung liegt auch ein Antriebsritzel, das sich durch einen oder mehrere, stirnseitig fest angebrachte Haltevorsprünge auszeichnet, die jeweils konzentrisch zur (konzentrischen) Ritzelverzahnung stirnseitig fest angebracht sind (vgl. Anspruch 7). Eine konstruktiv zweckmäßige Realisierungsvariante, welche auch die Herstellung von Antriebsritzel kleinen Durchmessers begünstigt, besteht darin, den Antriebsvorsprung exzentrisch an die Stirnseite des konzentrischen Haltevorsprungs anzuformen.

Die eingangs erörterte DE 707 505 lehrt, das Antriebsritzel nur auf einer Stirnseite mit einem exzentrischen Antriebszapfen zu versehen. Dem gegenüber wird mit einer Erfindungsausbildung (siehe Anspruch 8) die Zuverlässigkeit und Stabilität des Zahnstangen-/Ritzeleingriffs dadurch verbessert, dass auf der dem Antriebszapfen gegenüber liegenden Stirnseite des Antriebsritzels ein zusätzlicher Lagervorsprung angebracht wird, der exzentrisch gegenüber der Ritzelverzahnung liegt. Mit dem Lagervorsprung wird auf der anderen Ritzel-Stirnseite ein weiteres Halteelement geschaffen, welches bei Aufnahme in einem Drehlager das Ritzel vor Verkippen in der Zahnstange schützen kann. Zweckmäßig liegen der Antriebs- und der Lagervorsprung in einer gemeinsamen Flucht bzw. auf einer gemeinsamen Gerade parallel zur Mitte- oder Symmetrie- oder Drehachse der Ritzelverzahnung (siehe Anspruch 9).

Zur Rückstellung der Lenkung in die Nullstellung/Geradeausfahrt ist es bekannt, einen Drehstab einzusetzen, welcher allerdings ein teures Bauteil ist. Beim eingangs genannten Stand der Technik nach DE 707 505 ist für eine selbsttätige Lenkrückstellung nichts offenbart.

Der Erfindung liegt ferner die Aufgabe zugrunde, bei einem gattungsgemäßen Lenkgetriebe den Bedienungskomfort verbunden mit der Fahrsicherheit zu erhöhen. Dem dient eine im Anspruch 10 angegebene Erfindungsausbildung, nach der das gattungsgemäße Lenkgetriebe mit einer Druck- oder Rückstellfederung versehen ist, welche an einem Getriebegehäuse abgestützt mit der Drehlagerung des Antriebsvorsprungs derart gekoppelt ist, dass die Druck- oder Rückstellfederung das Antriebsritzel mit seiner Ritzelverzahnung in den Verzahnungsbereich der Zahnstange drückt und/oder den Ausgleichshüben der Drehlagerung entgegen wirkt zwecks Rückstellung des Antriebsritzels in eine Ausgangs-Drehstellung. Insbesondere lässt sich so das Antriebsritzel in eine Drehstellung entsprechend der Geradeausfahrt (Ausgangs- bzw. Nullstellung) drücken. Vorzugsweise ist die Ausgangs- oder Nullstellung dahingehend definiert, dass dabei der exzentrische Antriebsvorsprung zur Zahnstange den geringsten Abstand aufweist, mit anderen Worten, wenn sich der Antriebszapfen auf der Stirnseite des Antriebsritzels auf seiner untersten Stellung befindet.

Um die Rückstellfederung besser zur Entfaltung zu bringen, ist es vorteilhaft, die Drehlagerung(en) in einem Hubgehäuse oder Hubkolben aufzunehmen, der entsprechend den oben genannten Ausgleichshüben des Antriebsvorsprungs geführt ist. Zweckmäßig ist dann die Druck- oder Rückstellfederung am Hubgehäuse oder Hubkolben in Angriff gebracht (siehe Anspruch 11).

Die Stabilität des Lenkgetriebes fördert es, wenn nach einer optionalen Erfindungsausbildung an der dem Antriebsvorsprung gegenüberliegenden Stirnseite des Antriebsritzels ein (weiterer) Drehlagervorsprung exzentrisch zur Ritzelverzahnung fest angebracht ist. Dieser Drehlagervorsprung kann dann in den genannten Führungskolben oder in einem separaten, zweiten Hubkolben aufgenommen sein, der ebenfalls entsprechend den Ausgleichshüben geführt ist (siehe Anspruch 12). Damit lässt sich einem Verkippen des Antriebsritzels in der Verzahnung mit der Zahnstange vorbeugen und die Zuverlässigkeit des Verzahnungseingriffs erhöhen. Dieser Effekt lässt sich noch weiter fördern mit einer optionalen Erfindungsausbildung, wonach die Rückstell- oder Druckfederung mehrere separate und/oder voneinander beabstandete Druckfederelemente umfasst, die gleichmäßig verteilt oder symmetrisch an einem Hubkolben oder je einem der separaten Hubkolben angreifen (siehe Anspruch 13).

Um beim Verzahnungseingriff zwischen Antriebsritzel und Zahnstange ein bestimmtes, der Funktionsfähigkeit dienliches Spiel zu gewährleisten, ist die Option zweckmäßig, eine einstellbare Gegenhalterung vorzusehen, welche gegen eine dem Antriebsritzel abgewandte Seite der Zahnstange drückt oder angreift (siehe Anspruch 14). Um ein entsprechendes Funktionszahnstangenspiel genauer dimensionieren zu können, ist in Weiterführung der genannten Ausbildung ein Gewindeeingriff vorgesehen. Dabei durchsetzt die Gegenhalterung eine Wandung eines Getriebegehäuses von außen (Zugänglichkeit von außen), wobei die Gegenhalterung zu ihrer Einstellbarkeit (beispielsweise mit einem eigenen Außengewinde) mit einem Wandungs-Innengewinde in Eingriff steht (siehe Anspruch 15). Durch die Einstellung eines bestimmten Spiels lässt sich so einem Festklemmen der Lenkung vorbeugen.

Der Stand der Technik nach oben bereits angesprochener DE 707 505 zeigt, dass der exzentrisch vom Antriebsritzel vorstehende Dreh- bzw. Antriebszapfen von einer Lagerbüchse umfasst ist, die in einem Kulissenstein aufgenommen ist. Letzterer ist in einer Kulisse für vertikale Ausgleichs-Hubbewegungen entsprechend der Exzentrizität des Dreh- bzw. Antriebszapfens geführt. Allerdings betrifft die Führung nicht das gesamte Antriebsritzel, so dass letzteres nicht ausreichend zuverlässig im Verzahnungseingriff mit der Zahnstange gehalten ist. Vom auf- und abgehenden Kulissenstein ist ja nur die Zahnrad-Lagerbüchse umfasst.

Damit wird die Aufgabe aufgeworfen, die Stabilität des Verzahnungseingriffs zwischen Zahnstange und Antriebsritzel sowie die Führung für die Ausgleichshübe zu erhöhen. Zur Lösung wird ein Hubgehäuse oder der Hubkolben für die Aufnahme und Linearführung wenigstens eines Drehlagers eines exzentrisch angeordneten Antriebsvorsprungs eines Zahnstangen-Antriebsritzels vorgeschlagen. Dabei ist der Aufnahmeraum im Hubgehäuse oder im Hubkolben mindestens zur Aufnahme eines linear hin- und hergehenden Antriebsritzels mit Ritzelverzahnung und exzentrischer Drehlagerung ausgebildet. Zweckmäßig ist der Aufnahmeraum so dimensioniert, dass das Antriebsritzel mit dem zweifachen der Exzentrizität hin- und hergehen kann, mit welcher der Antriebsvorsprung gegenüber der Mittelachse der Ritzelverzahnung versetzt liegt. Entsprechendes gilt für das formschlüssig mit dem Antriebsritzel in Eingriff gehende Haltestück, indem der Aufnahmeraum zu dessen Aufnahme mit seinem parallel zur Zahnstange verlaufenden Hubbewegungen bemessen ist.

Zur stabilen Fixierung von Drehlager-Komponenten ist es zweckmäßig, in der Wandung des Hubgehäuses oder des Hubkolbens eine oder mehrere Aussparungen vorzusehen, die zum Aufnahmeraum führen und je für die Aufnahme eines Drehlagers ausgebildet, insbesondere dimensioniert oder bemessen sind. Damit lässt sich der Vorteil erzielen, dass insbesondere eine doppelte Drehlagerung realisiert werden kann, beispielsweise durch zwei einander bezüglich der Hubgehäuse- oder Hubkolben-Mittelachse diametral gegenüberliegende Drehlager, welche für eine gleichmäßige Halterung des Antriebsritzels mit stabilisiertem Verzahnungseingriff mit der Zahnstange sorgen.

Den stabilen Verzahnungseingriff fördert es weiter, wenn nach einer Erfindungsoption in der Außenwandung des Hubgehäuses oder Hubkolbens eine oder mehrere Eingriffsmittel, beispielsweise Aufnahmevertiefungen oder - löcher zum Angriff durch eine Druckfederung ausgebildet sind. Der vorgenannten Stabilisierung der Verzahnung zwischen Antriebsritzel und Zahnstange dient eine achsensymmetrische Anordnung und/oder Verteilung der Eingriffsmittel auf der Wandungsaußenseite.

Um für das Getriebegehäuse eine kompakte Bauform erzielen zu können, ist nach einer optionalen Erfindungsausbildung vorgesehen, mehrere, in einer der Zahnstange zugeordneten Seite des Hubgehäuses oder Hubkolbens nutartige Ausnehmungen einzulassen, die achsensymmetrisch angeordnet und zur Bildung von Zahnstangen-Durchgängen miteinander fluchten. Bei der konkreten Realisierung bilden die Nut-Ausnehmungen ein gleichsam hufeisenartiges Durchgangs-Profil aus, welches die Zahnstange bei bestimmter Drehstellung des Antriebsritzels umgibt. Es handelt sich um diejenige Drehstellung(en), bei welcher bzw. welchen der Antriebsvorsprung zur Zahnstange den geringsten oder einen relativ geringen Abstand aufweist.

Im Rahmen der Erfindung liegt schließlich die Verwendung des in der oben angesprochenen DE 707 505 offenbarten Antriebsritzels mit exzentrisch angebrachten Antriebszapfen zur Verkürzung des Lenkwinkels (sogenannte progressive Zahnstangenlenkung). So fällt in den Rahmen der Erfindung eine Verwendung eines für den Eingriff in eine Zahnstange eines Kraftfahrzeug-Lenkgetriebes vorgesehenen Antriebsritzels mit einem exzentrisch zur Ritzelverzahnung stirnseitig fest angebrachten, drehbar gelagerten Antriebsvorsprung, der zur Ankopplung einer Kraftfahrzeug-Lenkspindel bzw. - Lenkrads eingesetzt wird, zu einer progressiven oder degressiven Zahnstangenlenkung, bei der ein zunehmender Lenkrad-Drehwinkel in eine Ritzeldrehung mit sich verändernder Getriebe-Übersetzung und einen nicht linearen Anstieg oder Abfall eines resultierenden Zahnstangen-Schubwegs umgesetzt wird. Nach einer optionalen Weiterbildung dieser Verwendung wird die Drehstellung des Antriebsritzels so eingestellt, dass in einer Ausgangsstellung entsprechend der Geradeausfahrt der Antriebsvorsprung zur Zahnstange den kleinsten Abstand und damit die kleinste Getriebeübersetzung aufweist, die dann mit zunehmender Lenkradverdrehung überproportional bzw. progressiv im Sinne einer Lenkwinkelverkürzung zunimmt.

Weitere Einzelheiten, Merkmale und Vorteile der Erfindung ergeben sich aus der nachfolgenden Beschreibung von beispielhaften Ausführungsformen der Erfindung sowie aus den Zeichnungen. Diese zeigen in:
Figur 1: Ein Lenkgetriebe in einer Schnittdarstellung in Längsrichtung der Lenkspindel bzw. längs der Linie B-B in Fig. 1 a
Figur 1a: Das Lenkgetriebe gemäß Figur 1 in der Draufsicht mit geschlossenem Gehäuse.
Figur 2: Das Lenkgetriebe in einer Schnittdarstellung in Längsrichtung der Zahnstange bzw. längs der Linie A-A in Fig. 1 a
Figur 3a-3d: Ein erfindungsgemäßes Antriebsritzel in unterschiedlichen Ansichten.
Figur 4a-4c: Ein erfindungsgemäßes Halte- bzw. Gleitstück in unterschiedlichen Ansichten.
Figur 5a-5c: Ein erfindungsgemäßer Gehäusedeckel in unterschiedlichen Ansichten.
Figur 6a-6d: Ein erfindungsgemäßer Hubkolben in unterschiedlichen Ansichten.
Figur 7: Eine perspektivische, teilweise aufgerissene Darstellung eines Lenkgetriebes ohne Antriebsritzel.
Figur 8: In perspektivischer Darstellung das Antriebsritzel, das Halte- bzw. Gleitstück und den Hubkolben im zusammengebauten Zustand.
Figur 9: Ein Beispiel eines erfindungsgemäßen Lenkgetriebes in perspektivischer, teilweise transparenter Darstellung im zusammengebauten Zustand.
Figur 10: Das Lenkgetriebe gemäß Figur 9 in einer anderen Ansicht in entsprechender perspektivischer, transparenter Darstellung im zusammengebauten Zustand.
Figur 11: Ein beispielhaftes erfindungsgemäßes Lenkgetriebe in perspektivischer Darstellung im zusammengebauten Zustand mit geschlossenem Gehäuse.
Figur 12a: In perspektivischer Darstellung die Ankopplung einer Lenkspindel mittels Kreuzgelenk an ein beispielhaftes, erfindungsgemäßes Lenkgetriebe.
Figur 12b: Eine Figur 12a entsprechende, aber vergrößerte Ansicht mit Kreuzgelenk und Schiebemuffe zur Ankopplung der Lenkspindel an das Lenkgetriebe bzw. das Antriebsritzel.
Figur 13: Eine schematische Ansicht quer zur Zahnstange mit Darstellung unterschiedlicher Bewegungsstellungen.
Figur 14a-14f: Geschnittene oder aufgerissene Darstellungen in Längsansicht der Zahnstange und in Draufsicht für eine 0 Grad- und eine 180 Grad-Stellung eines Lenkgetriebes.
Figur 15.1 - 15.8: Perspektivische, aufgerissene Momentansichten unterschiedlicher Bewegungsstellungen eines Lenkgetriebes.
Figur 16: Eine Darstellung der Drehwinkelsituation bei erfindungsgemäßer Verwendung eines exzentrisch gelagerten Antriebsritzels in einem Lenkgetriebe.
Figur 17: Ein Lenkdiagramm für das Lenkgetriebe.

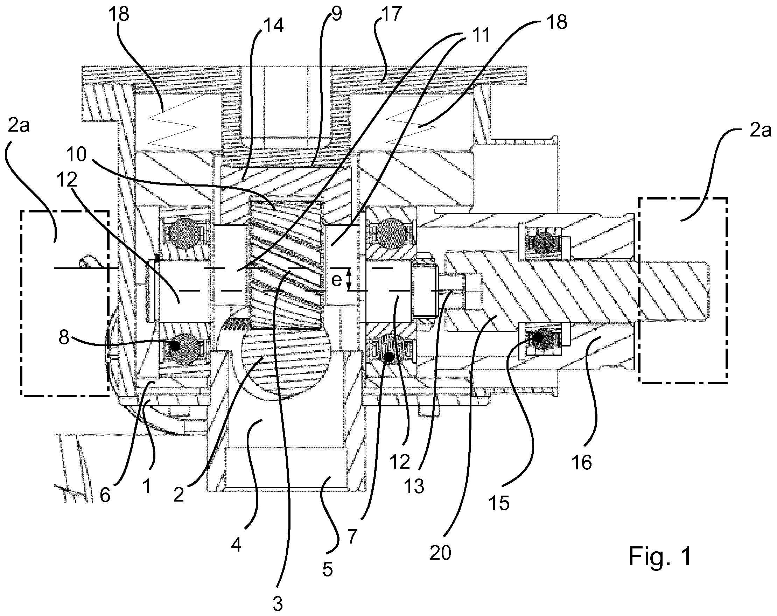

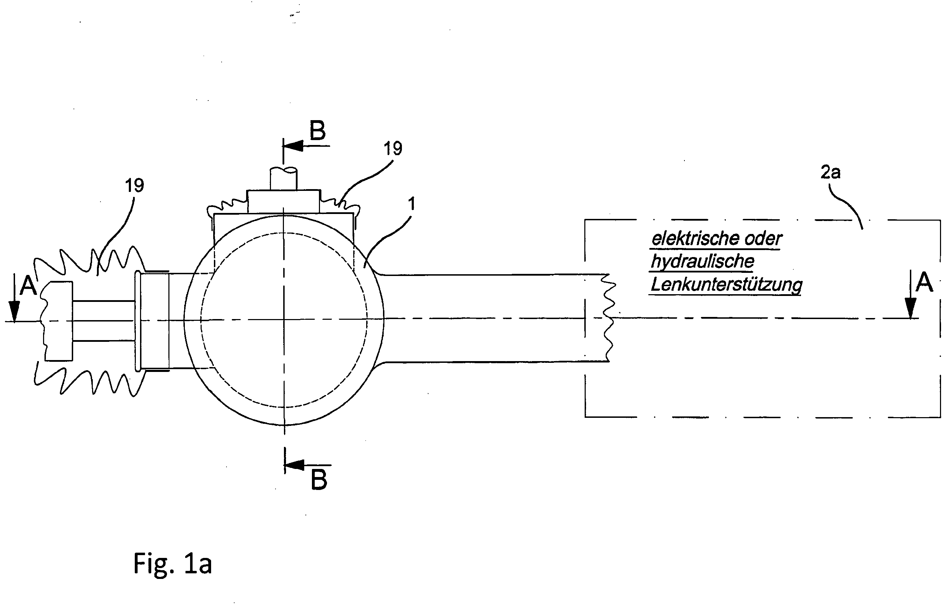

Gemäß Figur 1 sind in einem Getriebegehäuse 1 eine Zahnstange 2 und ein damit kämmendes Antriebsritzel 3 untergebracht. Das Antriebsritzel 3 ist mit einem exzentrisch angebrachten Antriebsvorsprung (Lagerzapfen) 12 an seiner Stirnseite versehen, welcher in einem Festlager 7, ebenfalls exzentrisch angeordnet, gelagert ist. Die Zahnstange 2 ist im Bereich einer hydraulischen oder elektrischen Lenkunterstützung 2a (schematisch angedeutet) sowie durch eine Gegenhalterung 4,5 gestützt und geführt. Die Gegenhalterung enthält ein Druckstück 4 zur Anlage an einer dem Antriebsritzel 3 abgewandten Unterseite der Zahnstange 2. Das Druckstück 4 ist innerhalb der Gehäusewandung angeordnet und lässt sich mit einem in Richtung zur Zahnstange 2 von außen anliegenden Feingewinde-Gegenhalter 5 in Richtung zur Zahnstange 2 verstellen und insbesondere gegen die Zahnstange 2 drücken, so dass ein bestimmtes Spiel für die Verzahnung und ein nachstehend noch beschriebenes Gleitstück 14 eingestellt werden kann. Dazu ist ein gegenseitiger Schraubgewindeeingriff zwischen dem Außenmantel des Feingewinde-Gegenhalters 5 und dem Innenmantel des Wandungsdurchgangs ausgebildet (nicht gezeichnet).

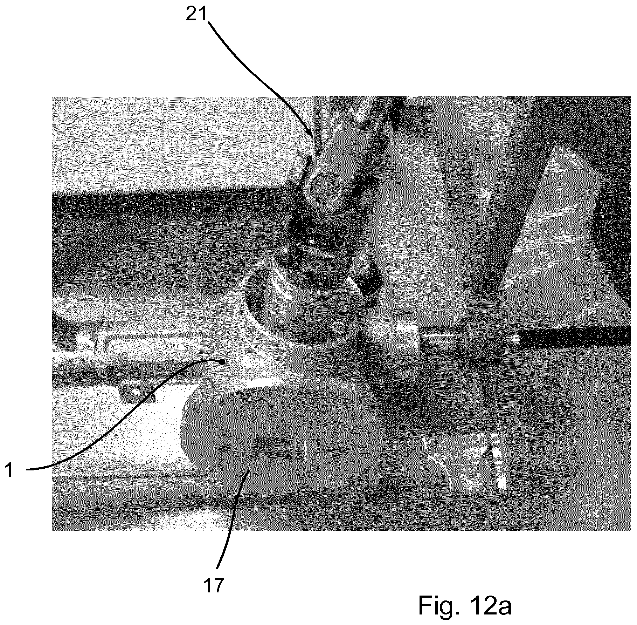

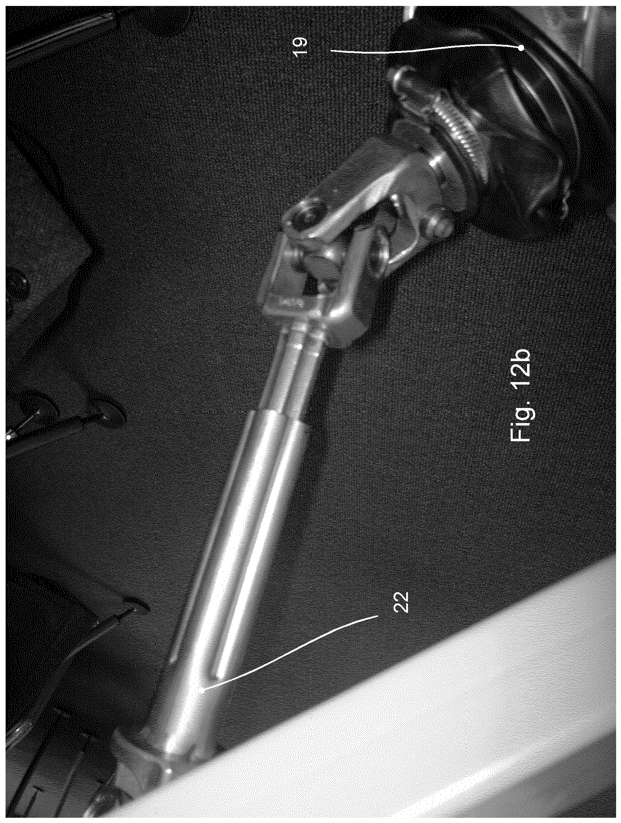

Die Drehlagerung des Antriebsritzels 3 umfasst gemäß Figur 1 rechts ein Festlager 7 und links ein Loslager 8. Beim Festlager 7 sind der Innenring und der Außenring fest fixiert, so dass Axialkräfte aufgenommen werden können. Das gemäß Zeichnung links angeordnete Loslager 8 ist nicht auf Null-Spiel fixiert, so dass damit Wärmedehnungen auffangbar sind. Die exzentrische Drehlagerung 7,8 des Antriebsritzels 3 befindet sich in einem Führungskolben 6, der im Getriebegehäuse 1 linear, insbesondere auf- und abgehend geführt ist. Das Antriebsritzel 3 weist einen Verzahnungsbereich 10, einen dazu konzentrisch angebrachten Gleitzapfen oder Haltevorsprung 11 für ein darauf formschlüssig geführtes Gleitstück oder Haltestück 14, beidseitige, exzentrische Lagerzapfen beziehungsweise -vorsprünge 12 und einen zu den Lagerzapfen 12 koaxialen Lenkspindelzapfen 13 mit Kerbverzahnung auf. Der Lenkspindelzapfen 13 dient der Ankopplung einer Lenkspindel 20, die im weiteren Bereich standardmäßig als Kreuzgelenkwelle mit Schiebemuffe zum Längenausgleich ausgebildet sein kann (siehe schematische Darstellungen in Figur 12a und 12b). Im gezeichneten Ausführungsbeispiel dient der Lenkspindellagerung das Spindel-Kugellager 15 und das Flanschgehäuse 16. Letzteres wäre bei Hydrolenkung als Ventilgehäuse für Drehschieber zu erweitern. Nach einer anderen Variante wäre ein Drehschieberventil mit integrierter Gelenkkupplung anzuflanschen.

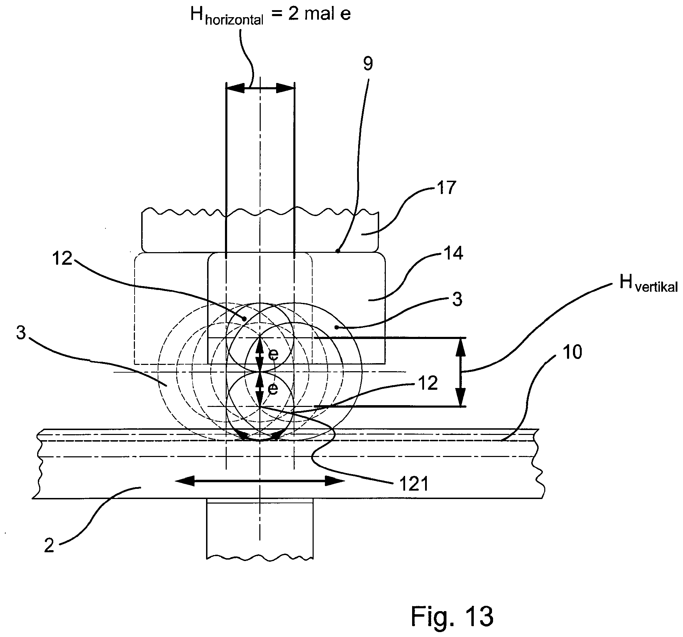

Schematisch angedeutete Druckfedern 18 drücken den Führungskolben 6 nach unten und damit auch das darin exzentrisch gelagerte Antriebsritzel 3 mit einer bestimmten Kraft, beispielsweise 250N, in die Verzahnung der Zahnstange 2. Der Verzahnungseingriff wird mittels eines als separates Teil hergestellten Gleitstücks 14 gesichert, indem das Gleitstück 14 an die Unterseite eines Gegenhalterdeckels 17 gleitend hin- und her verschiebbar anliegt. Mithin ist das Gleitstück 14 innerhalb des Führungskolbens 6 ausschließlich parallel mit konstantem Abstand zur Zahnstange entlang der Unterseite des Gegenhalterdeckels 17 entsprechend der Exzentrizität e hin- und her verschiebbar (vgl. auch weiter unten Figur 13). Dies erfolgt innerhalb des bei Lenkbewegungen gegen die Druckfedern 18 auf- und abgehenden Führungskolbens 6. Bei normalen Fahrbetrieb arbeitet der Verzahnungseingriff mit Null-Spiel aufgrund der ständig anstehenden Last der Druckfedern 18.

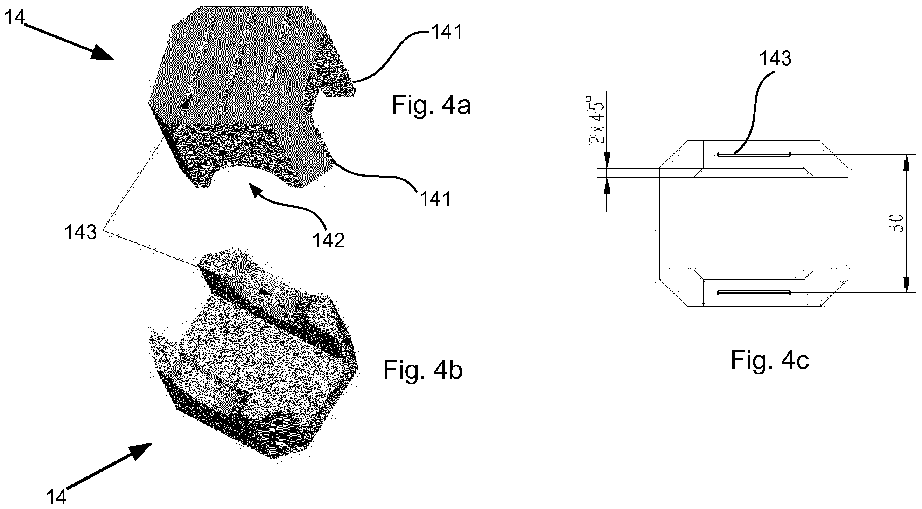

Je nach Lenkwinkel macht der Lager- bzw. Führungskolben 6 eine der Exzentrizität e des Antriebszapfens 12 entsprechende Auf- und Abbewegung. Das Gleitstück oder Haltestück 14 "reitet" über komplementäre Konkavitäten (siehe Fig. 4a, 4b) mit zum Beispiel 0,1mm Spiel auf den konzentrisch auf je einer Stirnseite des Antriebsritzels 3 angebrachten Gleitzapfen oder Haltevorsprung 11 und gleitet an einer Gleitfläche 9, welche aus der Außenseite des Gleitstücks oder Haltestücks 14 und der gegenüberliegenden Unterseite des Gegenhalter-Deckels 17 gebildet ist. Die linearen Bewegungskomponenten des Antriebsritzels 3 mit damit formschlüssig in Eingriff stehendem Gleitstück oder Haltestück 14 entlang der beziehungsweise relativ zur Zahnstange 2 sind in Figur 13 angedeutet. Tritt aber eine größere Störkraft auf, wie sie z.B. beim Parken am Bordstein auf das Lenksystem entsteht, dann wirkt diese Störkraft gegen die Federn 18, und das Gleitstückspiel wird zu null. Das Gleitstück oder Haltestück 14 nimmt dann die Kraft auf. Je nach Störkraftrichtung kann auch das Druckstück 4, das vom Feingewinde-Gegenhalter 5 verstellbar ist, eine erhöhte Kraft aufnehmen. In diesem Fall bleibt das Gleitstückspiel bei z.B. 0,1mm.

Aus vorstehenden Ausführungen ergibt sich, dass der Lenkspindelzapfen 13 mit der Kreuzgelenkanbindung einen Auf- und Abweg entsprechend der Exzentrizität e und eine Drehung von z.B. +/- 225° Grad machen kann. Zur Abdichtung des Lenksystems ist ein Faltenbalg 19 zweckmäßig, der wie in Figur 1a angedeutet angeordnet ist.

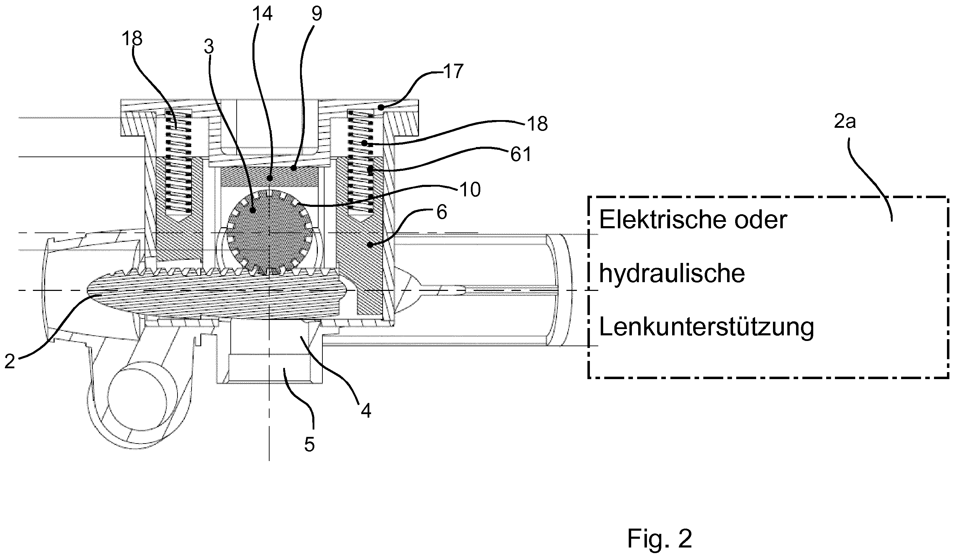

Gemäß Figur 2 sind die Druckfedern 18 einerseits gegen eine Unterseite des Gegenhalter-Deckels 17 und andererseits in Aufnahmelöchern 61 des Führungskolbens 6 abgestützt. Anhand der Schraffur ist erkennbar, dass der Gegenhalter-Deckel als loses Teil ausgebildet ist.

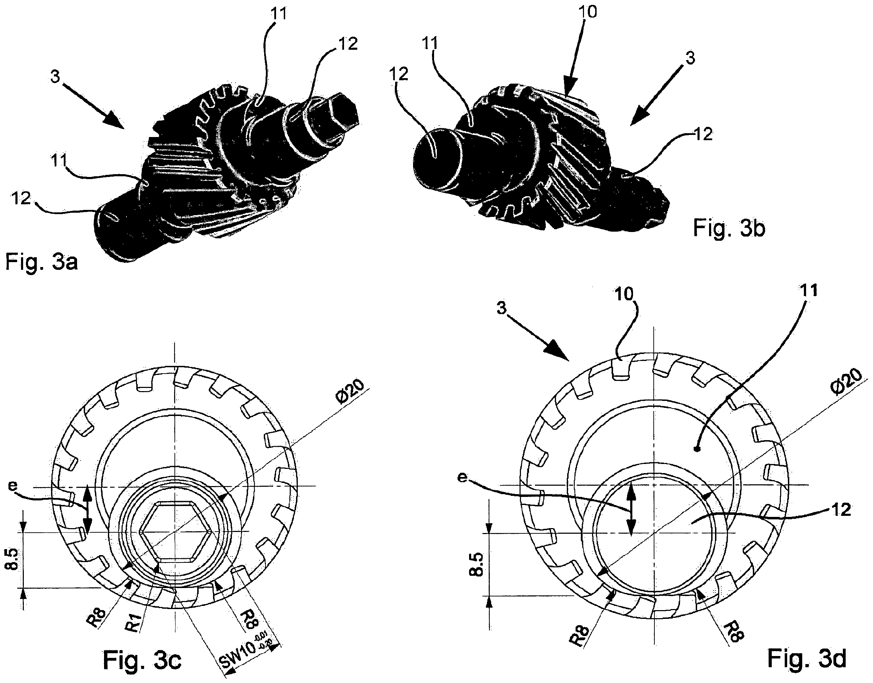

Gemäß Figur 3a-3d ist das Antriebsritzel an je einer Stirnseite mit einem konzentrisch angebrachten, zylindrischen Gleitzapfen oder Haltevorsprung 11 versehen, an dessen jeweiliger Stirnseite ein exzentrischer Lagerzapfen oder Antriebsvorsprung 12 angeformt ist. Derjenige Lagerzapfen, welcher in einem Mehrkant-Vorsprung endet, dient als Antriebsvorsprung 12 für den Angriff der Lenkspindel. In Figuren 3c und 3d ist jeweils die Exzentrizität e eingezeichnet, mit welcher die mittlere Symmetrieachse der Lagerzapfen bzw. des Antriebsvorsprungs 12 gegenüber der mittleren Symmetrieachse des Antriebsritzels 3 bzw. dessen Ritzelverzahnung 10 versetzt ist. Außerdem ist beim Verzahnungsbereich 10 die Schrägverzahnung erkennbar.

Gemäß Figur 4a-4c besitzt das Halte- bzw. Gleitstück 14 eine insbesondere aus Figur 4b erkennbare, U-artige Grundform mit den zwei U-Schenkeln 141. Diese sind auf ihrer Schmalseite jeweils mit einer konkaven Wölbung 142 versehen, deren Krümmung bzw. Radius komplementär zum jeweiligen Außenmantel der Gleitzapfen 11 des Antriebsritzels 3 gestaltet ist. Dadurch ist dem Gleitstück 14 ein formschlüssiges "Reiten" auf den Gleitzapfen 11 des Antriebsritzels 3 möglich. Zur Erleichterung bzw. Förderung der Gleitbewegungen sind beim Gleitstück 14 Schmiernuten 143 sowohl auf dessen Oberseite, welche der Unterseite des Gegenhalter-Deckels 17 zugeordnet ist, als auch in der die konkave Wölbung 142 begrenzenden Schmalseite ausgebildet, welche dem Außenmantel der Gleitzapfen 11 des Antriebsritzels 3 zugeordnet ist. Für den Lenkbetrieb können die Schmiernuten mit Schmiermittel ausgefüllt werden.

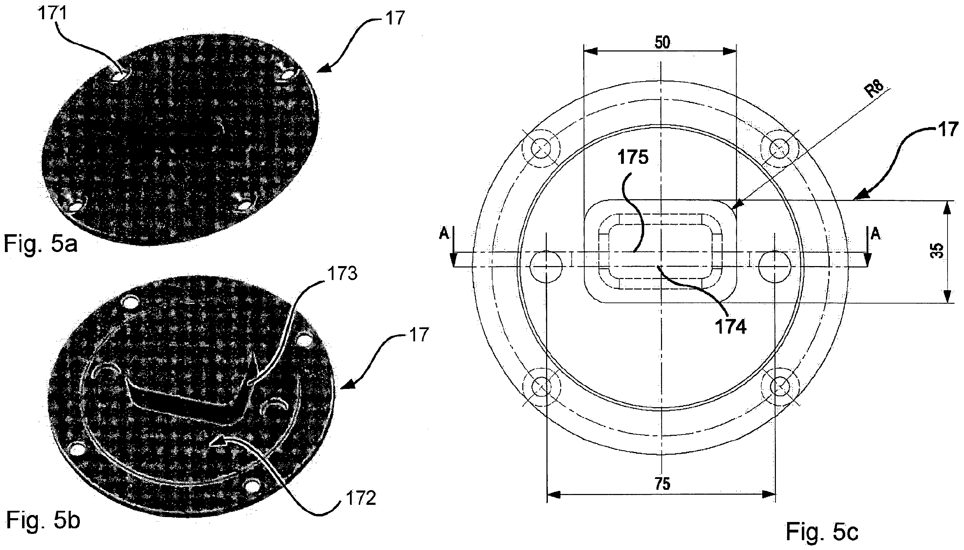

Gemäß Figuren 5a-5c weist der Gegenhalter-Deckel 17 Schraublöcher 171 in peripherer Lage zur Befestigung am Getriebegehäuse auf. Ferner erhebt sich auf seiner dem Gehäuseinneren zugewandten Innenseite 172 ein Innenvorsprung 173 mit einer dem Gleitstück 14 zugeordneten Gleitfläche 9, welche gegenüber der Deckelgrundfläche nach innen versetzt liegt. Ferner ist der Gegenhalter-Deckel 17 mit einer kreisscheibenartigen Grundform mit der mittleren Symmetrieachse 174 gestaltet, gegenüber welcher der Innenvorsprung 173 mit seiner mittleren Längsachse 175 radial versetzt liegt.

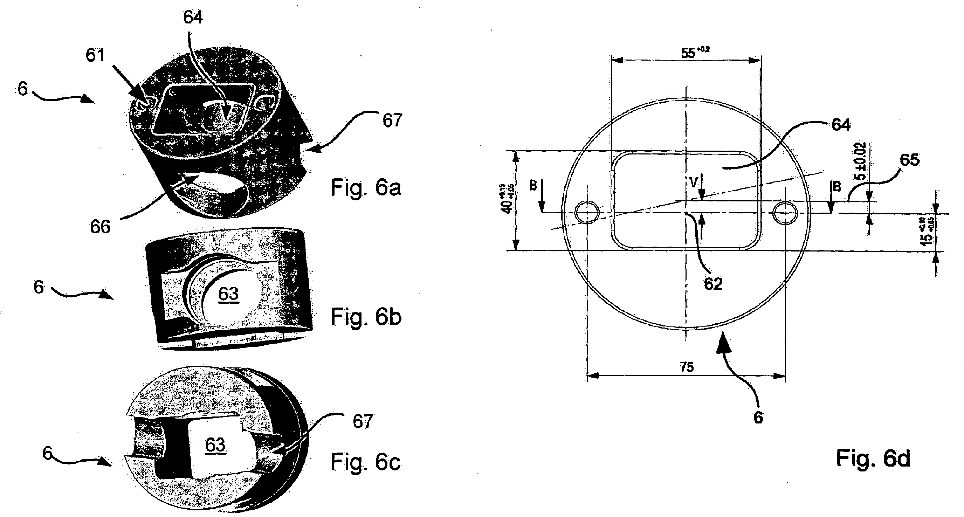

Gemäß Figur 6a-6d ist der Führungskolben 6 mit einer zylindrischen Grundform gestaltet. In die bereits angesprochenen, achsparallel verlaufenden Aufnahmelöcher 61, die die gegenüber einer mittleren Längs-Symmetrieebene 62 diametral gegenüberliegen, lassen sich die oben angesprochenen Druckfedern 18 gleichmäßig beziehungsweise symmetrisch ausbalanciert in Angriff bringen. Zu einem Hohlraum 63 des zylindrischen Führungskolbens 6 führt eine rechteckartige Eintrittsaussparung 64, deren Ecken abgerundet sind. Sie weist einen Grundriss komplementär zum Außenprofil des Innenvorsprungs 173 des Gegenhalter-Deckels 17 auf, so dass letzterer über die Eintrittsaussparung 64 in Richtung zum Aufnahmeraum 63 und in Gleitkontakt mit dem Gleitstück 14 zur Bildung der Gleitfläche 9 treten kann. So kann im Lenkbetrieb der Innenvorsprung 173 des Gegenhalter-Deckels 17 mit der Oberseite des Gleitstücks 14 die Gleitfläche 9 gemeinsam bilden. Gegenüber der mittleren Längs-Symmetrieebene 62 des zylindrischen Führungskolbens 6 ist die Eintrittsaussparung 64 mit ihrer mittleren Längsachse bzw. Symmetrielinie 65 um einen Versatz v versetzt angeordnet.

Der Hohlraum 63 des Führungskolbens 6 ist zur Aufnahme des Antriebsritzels 3 mit Außenverzahnung 10 bemessen, wobei zur Aufnahme seiner beidseitigen Drehlagerung 7, 8 (siehe oben) Wandungs-Aussparungen 66 einander diametral gegenüberliegend bzw. miteinander diametral fluchtend, gebildet sind. Sie besitzen eine an dem Außenring von Kugellagern angepasste, kreiszylindrische Grundform und führen jeweils zum Aufnahmeraum 63 des Führungskolbens 6.

An seiner den Aufnahmelöchern 61 bzw. der Eintrittsaussparung 64 abgewandten Stirnseite ist der Führungskolben 6 mit nutartigen Durchgangs-Ausnehmungen bzw. Durchgangsnuten 67 gestaltet, die zur Bildung einer gemeinsamen Durchgangsflucht für die Zahnstange 2 angeordnet sind. Diese Durchgangsflucht ist dann relevant, wenn sich der Führungskolben im Rahmen seiner Auf- und Abbewegungen in der untersten bzw. der Zahnstange 2 am nächsten liegenden Stellung befindet.

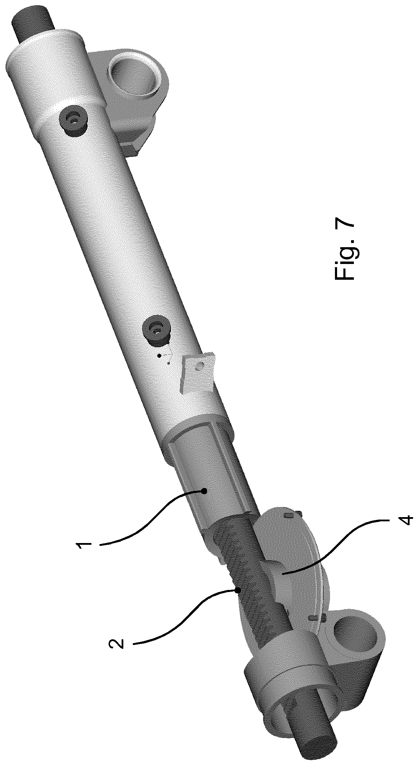

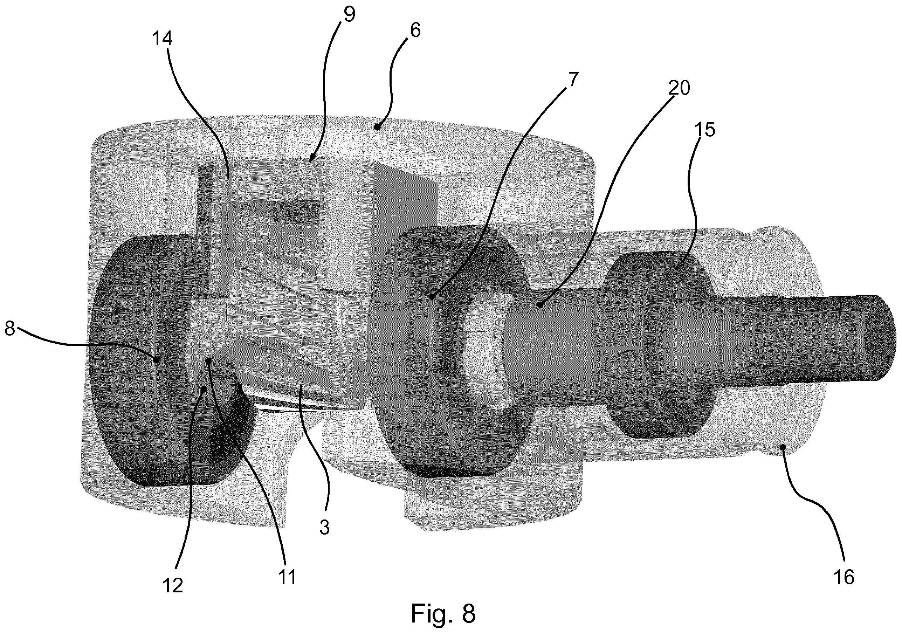

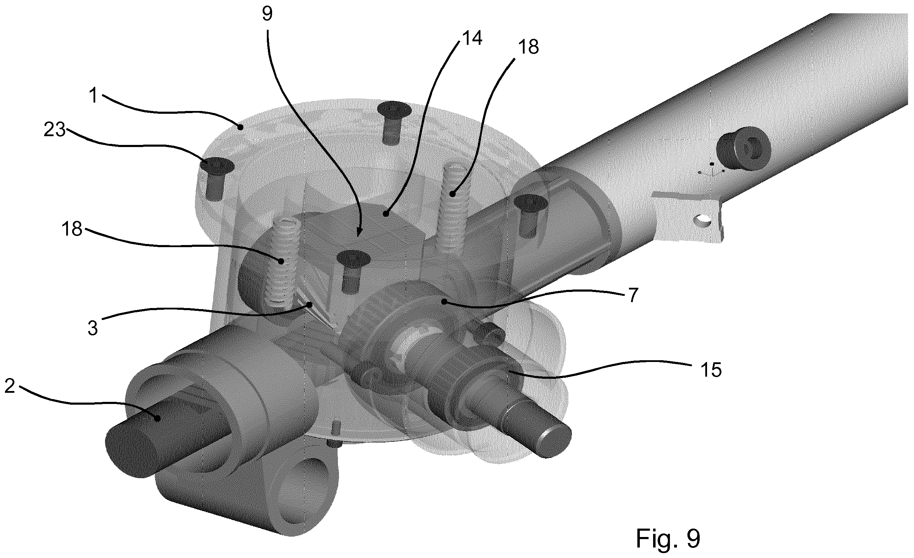

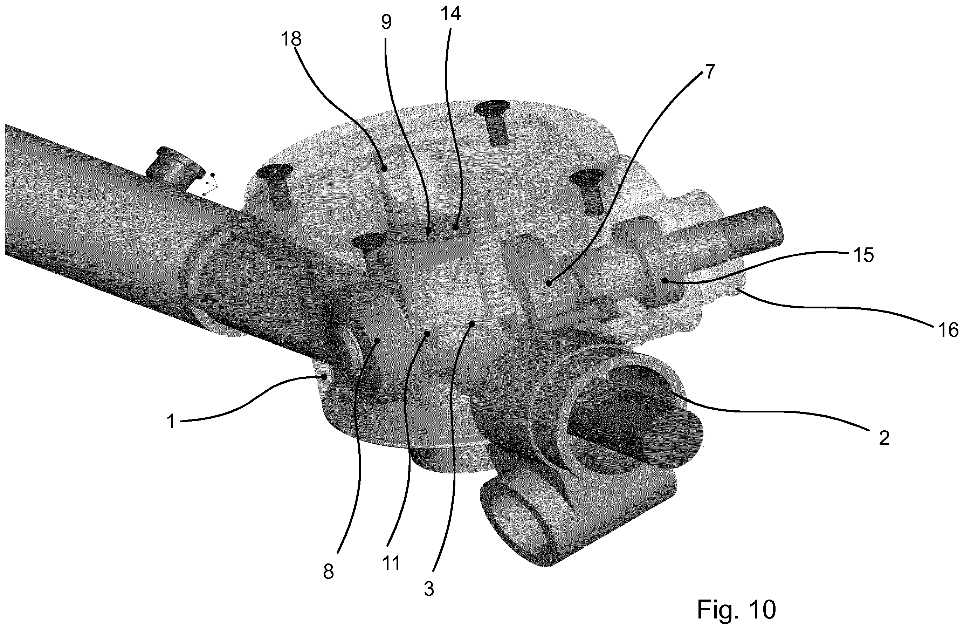

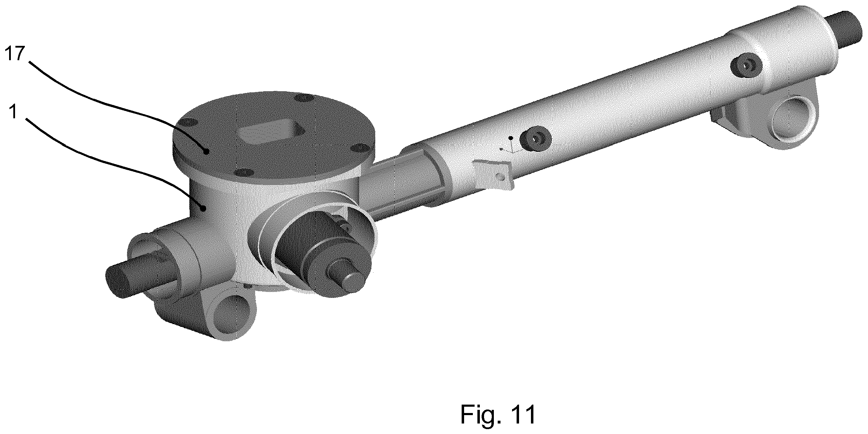

In Figur 7 ist das noch unvollständige Lenkgetriebe mit frei zugänglicher Zahnstange 2 gezeigt. Damit lässt sich das Antriebsritzel 3 in Eingriff bringen, wobei es gemäß Figur 8 vom Halte- bzw. Gleitstück 14 sowie vom Führungskolben 6 erfindungsgemäß umgeben ist. Ferner lässt sich aus Figur 9 entnehmen, dass über Verbindungsschrauben 23 noch der lose Gegenhalter-Deckel 17 zur Bildung der Gleitfläche 9 aufzuschrauben ist. Im Übrigen verweisen die in den Figuren 7-11 verwendeten Bezugszeichen auf Teile entsprechend den vorausgegangenen Erläuterungen, so dass sich weitere Ausführung erübrigen.

Gemäß Figur 12a und 12b ist über ein Kreuzgelenk 21 eine Schiebemuffe 22 zwecks Kombination mit dem exzentrisch angetriebenen Antriebsritzel 3 im Einsatz. Über die Schiebemuffe 22 ist eine Aufnahme beziehungsweise Kompensation der Auf- und Abbewegungen des Lagerzapfens beziehungsweise Antriebsvorsprungs 12 gegenüber der Lenkrad-Bedienperson denkbar. Bei Kreuzgelenk 21 und Schiebemuffe 22 handelt es sich um in der Lenkgetriebe-Technik allgemein bekannte Bauteile bzw. Komponenten, so dass sich weitere Erläuterungen erübrigen.

In Figur 13 ist mittels einer schematischen Grobdarstellung das Bewegungsprinzip gezeigt. Der Lagerzapfen bzw. Antriebsvorsprungs 12 mit seiner Drehachse 121 kann aufgrund seiner Zwangsführung nur auf und ab gehen, und zwar jeweils um die Exzentrizität e. Die oberste Stellung des exzentrischen Antriebsvorsprungs 12 könnte einem Lenkwinkeleinschlag von 180° Grad und die unterste Stellung mit minimalem Abstand zur Zahnstange 2 könnte einem Lenkwinkeleinschlag von 0° Grad für die Geradeausfahrt entsprechen. Im Zuge der Lenkbewegungen des Fahrers wandert das Antriebsritzel 3 in der Zeichnungen nach Figur 13 relativ zur Zahnstange 2 einerseits nach rechts und andererseits nach links aus (letzteres gestrichelt angedeutet), wobei es in dem Verzahnungsbereich 10 der Zahnstange abrollt. Die maximale Auswanderung des Antriebsritzels 3 bezüglich der Zahnstange 2 nach rechts könnte etwa einem Lenkwinkelausschlag von 90° Grad entsprechen, und die maximale Auswanderung des Antriebsritzels 3 nach links einem Lenkwinkelausschlag von etwa -90° Grad in die andere Drehrichtung. Der entsprechende Auswanderungshub H_{horizontal}, der das zweifache der Exzentrizität e beträgt, bildet eine lineare Bewegungskomponente des Antriebsritzels 3 im Lenkbetrieb relativ zur Zahnstange 2 und verläuft etwa quer zum Vertikalhub Hᵥₑᵣₜᵢₖₐₗ der Drehachse 121 des Antriebsvorsprungs 12.

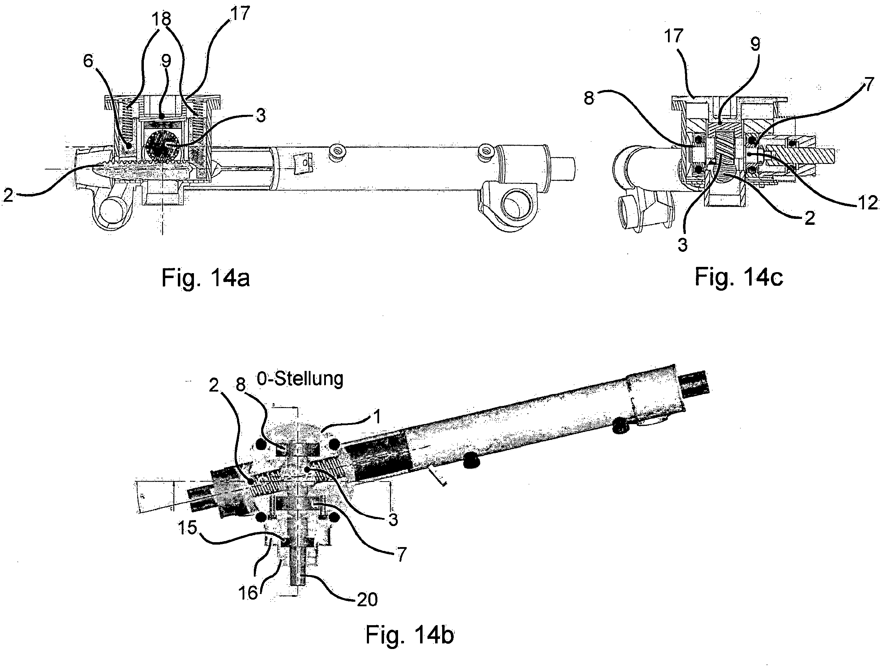

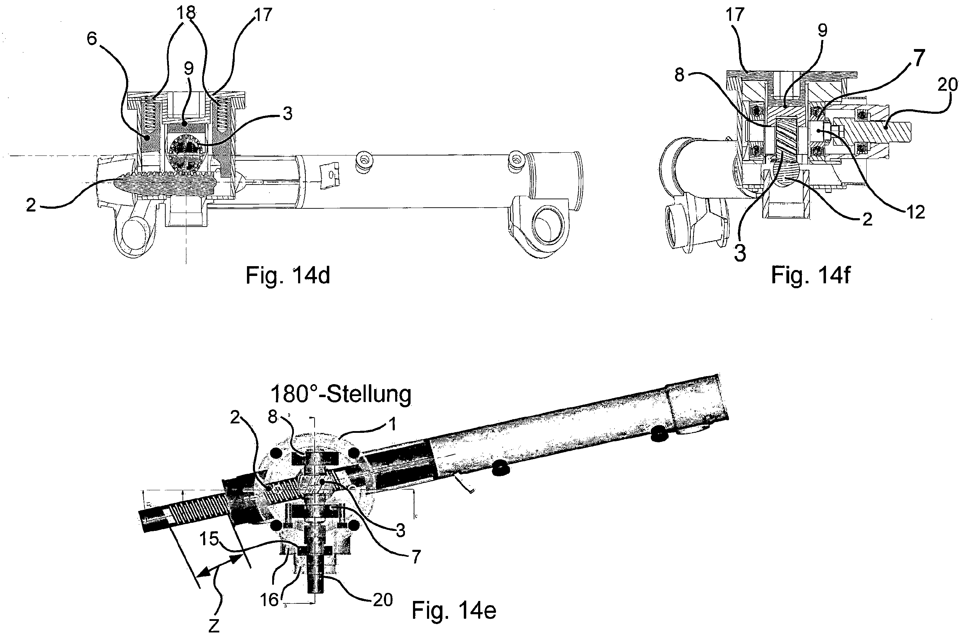

In Figuren 14a-14c ist das Lenkgetriebe in der 0 Grad-Ausgangsstellung für Geradeausfahrt dargestellt. Dabei weist, wie aus Figur 14c erkennbar, der Lagerzapfen bzw. Antriebsvorsprung 12 einen minimalen Abstand zur Zahnstange 2 beziehungsweise zu deren horizontaler Grundebene auf. Die Druckfedern 18 sind gemäß Figur 14a maximal ausgelenkt. In der in Figur 14d-14e dargestellten Stellung mit einem Lenkwinkel-Ausschlag von 180 Grad ist der Führungskolben 6 im Vergleich zur 0 Grad-Stellung gemäß Figur 14a nach oben versetzt, und der Lagerzapfen bzw. Antriebsvorsprung 12 besitzt einen maximalen Abstand zur Zahnstange 2 beziehungsweise zu deren horizontaler Grundebene. Das Antriebsritzel 3 ist gemäß Figur 14e relativ zur Zahnstange 2 nach rechts ausgewandert, wobei sich damit korrespondierend ein Zahnstangenversatz Z nach links ergibt.

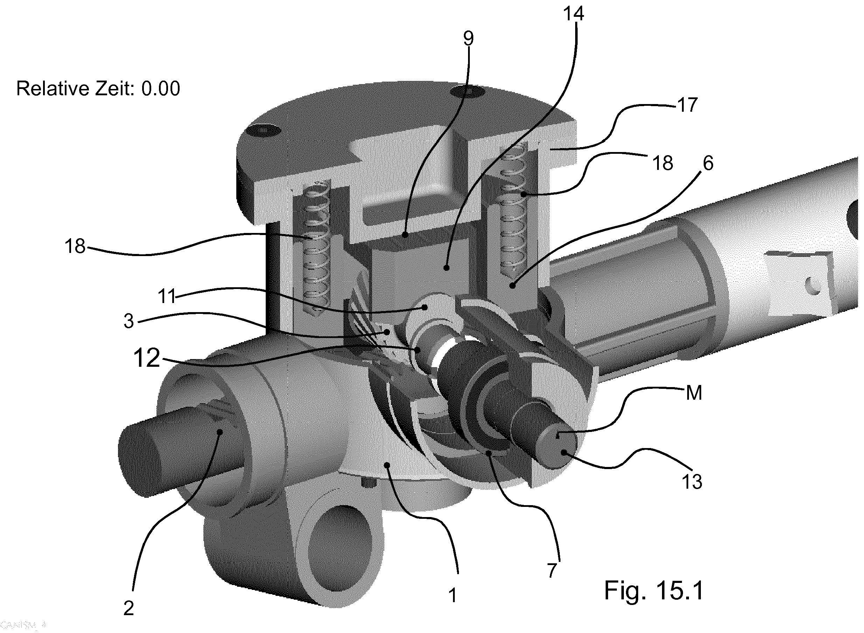

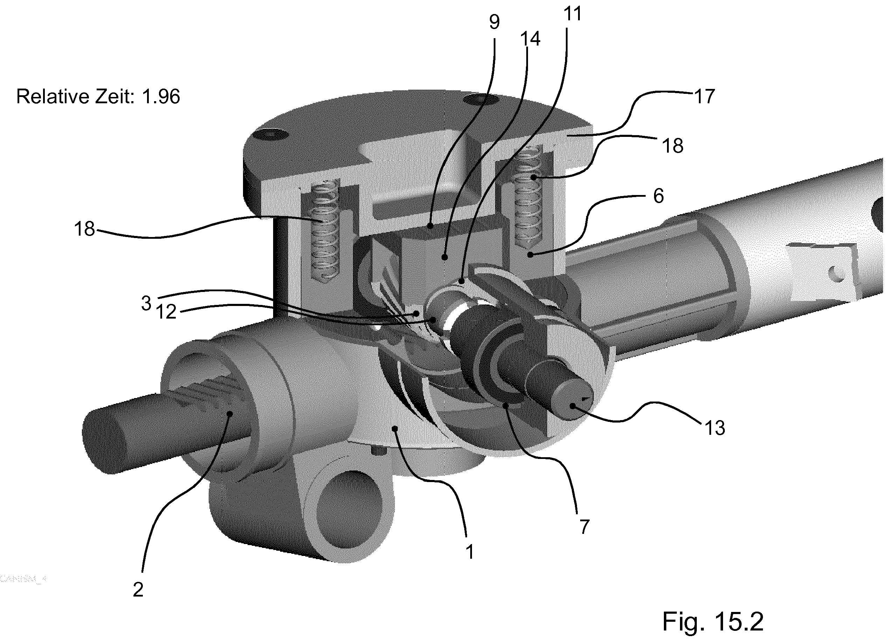

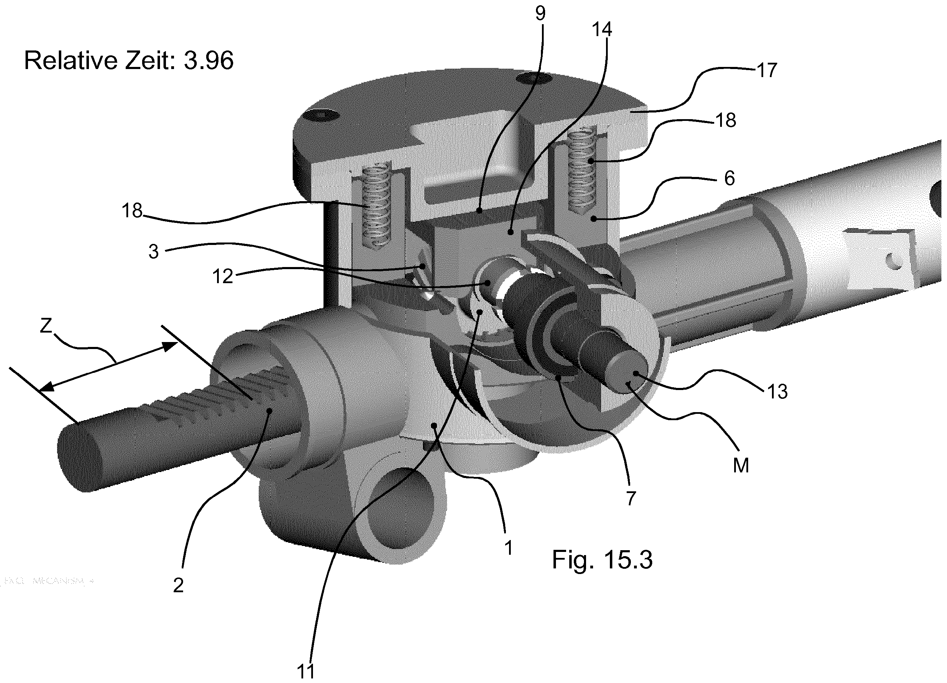

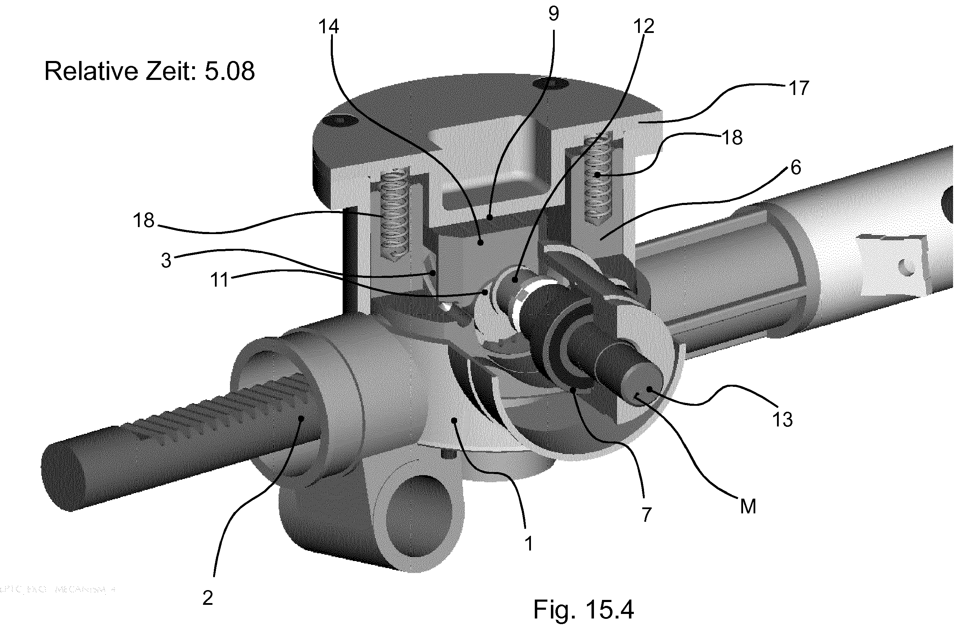

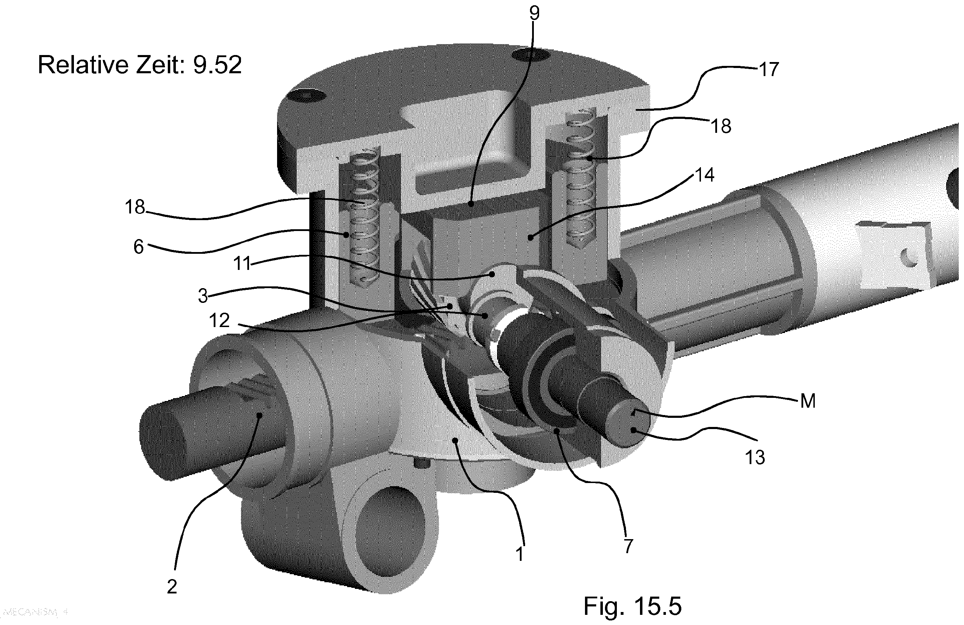

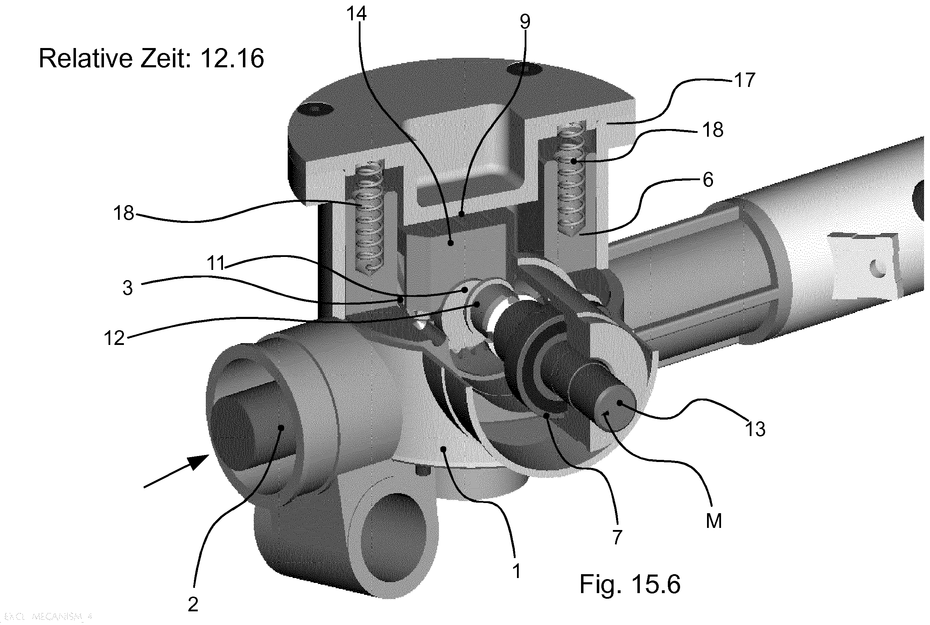

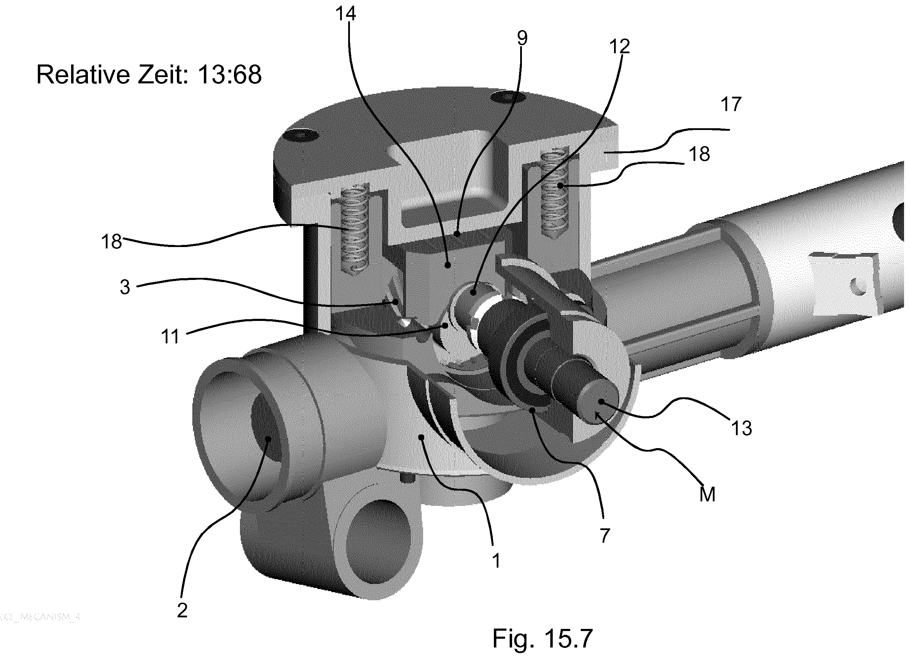

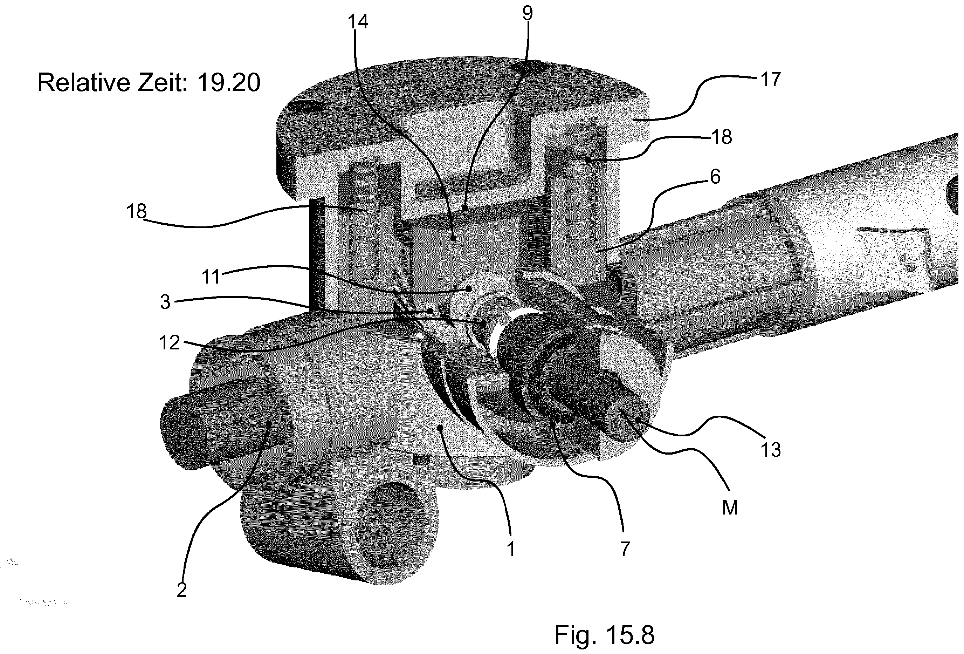

In der Momentaufnahme nach Figur 15.1 ist das Lenkgetriebe in einer Stellung für Geradeausfahrt. Am Lenkspindelzapfen 13 ist zur Illustrierung eine pfeilförmige Markierung M angebracht, die entsprechend der Geradeausfahrt vertikal nach oben zeigt. Der Führungskolben 6 befindet sich in seiner untersten Stellung mit minimalem Abstand zur Zahnstange 2 bzw. deren horizontaler Grundebene. Dabei erfolgt durch die Last der Druckfederung 18 eine Stabilisierung dieser Stellung gemäß Fig.15.1, und das Halte- bzw. Gleitstück 14 hat bezüglich der Druckfedern eine Mittelstellung eingenommen. Gemäß Figur 15.2 ist das Lenkrad um ca. 90 Grad nach rechts bzw. im Uhrzeigersinn verdreht, wobei sich das Gleitstück 14 innerhalb des Führungskolbens 6 linear gemäß Zeichnung nach rechts bewegt. Damit korrespondierend und aufgrund der Zwangsführung des exzentrisch angebrachten Lagerzapfens bzw. Antriebsvorsprungs 12 ist das Antriebsritzel 3 ebenfalls nach rechts ausgewandert. Der Führungskolben ist von der von ihm aufgenommenen Fest-Loslagerung 7, 8, welche die exzentrischen Lagerzapfen 12 umgibt, vertikal nach oben versetzt, wobei die Druckfedern 18 zusammengedrückt werden. Gemäß Figur 15.3 ist das Lenkrad und der angekoppelte Lenkspindelzapfen 13 weiter nach rechts um nun etwa 180 Grad verdreht. Dabei hat der Führungskolben 6 seine oberste Stellung unter weiteren Zusammendrückens der Druckfedern 18 erreicht. Das Gleitstück 14 ist auf dem konzentrischen Gleitzapfen 11 reitend zusammen mit dem Antriebsritzel 3 wieder in die Mittelstellung gewandert. Die Zahnstange 2 ist nun entsprechend dem 180 Grad Lenkwinkel-Einschlag um den Zahnstangenversatz Z ausgefahren. Dieses Zahnstangen-Ausfahren hat gemäß Figur 15.4 noch weiter zugenommen, indem das Lenkrad bzw. der Lenkspindelzapfen 13 noch weiter, über die 180 Grad-Stellung hinaus, im Uhrzeigersinn verdreht worden sind. Dabei hat sich das Gleitstück 14 aus seiner Mittelstellung nach links bewegt, während der Führungskolben durch die von ihm gehaltene, exzentrische Drehlagerung 7,8 und durch den Druck der Federn 18 wieder nach unten versetzt ist. Gemäß Figur 15.5 ist der Lenkwinkel fast wieder in die 0 Grad-Stellung für Geradeausfahrt zurückversetzt worden. Das Gleitstück 14 befindet sich nahezu in der Mittelstellung, und der Führungskolben 6 ist unter inzwischen weiterer Auslenkung der Druckfederung 18 nach unten versetzt. Hierbei wird die vorteilhafte Funktion der Druckfedern 18 deutlich, nämlich möglichst selbsttätig die Rückführung in die Ausgangsstellung mit Lenkwinkel gleich 0 Grad herbeizuführen oder zumindest diese Rückführung zu unterstützen. Gemäß Figur 15.6 ist nun ein Lenkwinkel-Ausschlag nach links entgegen dem Uhrzeigersinn um ca. 90 Grad vorgenommen. Entsprechend ist das Gleitstück 14 auf dem konzentrischen Gleitzapfen 11 reitend innerhalb des Führungskolbens 6 nach links ausgewandert. Letzterer wird über die in seiner Wandung aufgenommene Drehlagerung 7, 8 der Lagerzapfen 12 wieder von der tiefsten Stellung nach oben versetzt, wobei die Druckfedern 18 zusammengedrückt werden. Die Zahnstange 2 wird aufgrund der Linksdrehung nun nach rechts versetzt (siehe Pfeil). Gemäß Figur 15.7 ist ein Lenkwinkel-Ausschlag von etwa 180 Grad nach links nahezu erreicht, und das Gleitstück 14 hat wieder eine etwa mittige Stellung eingenommen. Der Führungskolben 6 ist von den exzentrischen Lagerzapfen 12 in die oberste Stellung unter maximaler Vorspannung der Druckfederung 18 bewegt. Gemäß Figur 15.8 ist der vorherige Lenkwinkel-Ausschlag nach links wieder nahezu rückgängig gemacht worden, wobei das Gleitstück 14 auf dem Gleitzapfen 11 wieder die Mittelstellung eingenommen hat, entsprechend Fig. 15.1. Die Druckfedern 18 drücken mit maximaler Außenlenkung den Führungskolben 6 in die unterste Stellung, dabei den 0 Grad-Lenkwinkel für Geradeausfahrt stabilisierend. Im Übrigen gelten die Ausführungen Drehung im Uhrzeigersinn entsprechend.

Aus Vorstehendem ist auch ableitbar, dass im Lenkbereich von 0 bis +/- 180 Grad durch die Druckfedern 18 eine automatische Lenkrückstellung auf 0 Grad erfolgt, d.h. der bei konventionellen Lenkgetrieben übliche Drehstab ist hierbei nicht mehr erforderlich.

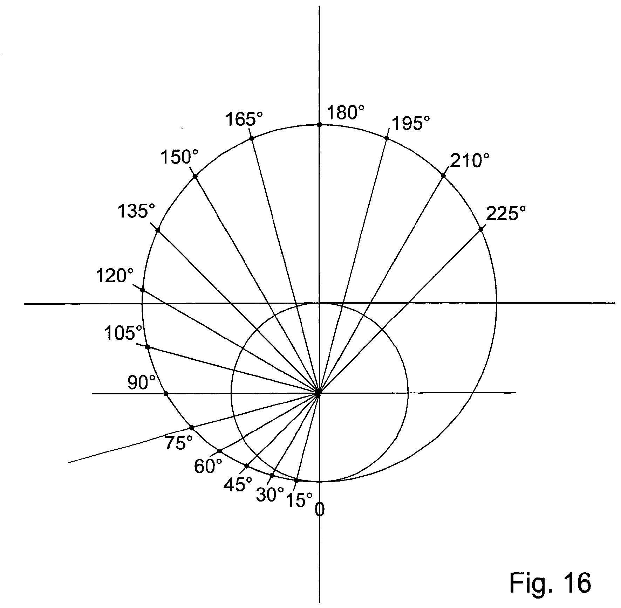

Figur 16 zeigt die Drehwinkelsituation, woraus die Bogenlängen hervorgehen, die im Verzahnungseingriff zu progressiv zunehmenden Schubwegen der Zahnstange 2 umgewandelt werden.

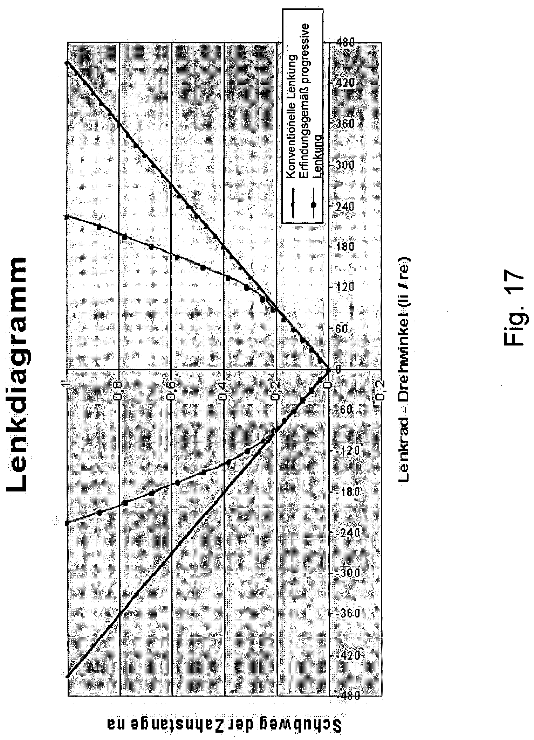

Beim Lenkdiagramm gemäß Figur 17 sind auf der Abszisse Lenkrad-Drehwinkel nach links und rechts, und auf der Ordinate der relative Schubweg aufgetragen. Der maximale Zahnstangen-Schubweg endet gemäß der Ordinate beim Wert 1. Bei konventionellen Lenkungen sind bei 1,25 Lenkradumdrehungen nach links und rechts +/- 450 Grad maximaler Lenkwinkel-Anschlag bekannt. Dabei zeigt das Diagramm, dass zwischen dem Lenkrad-Einschlag bzw. -Drehwinkel und dem erzielten Schubweg ein linearer Zusammenhang besteht. Dem gegenüber wird mit der Erfindung der Vorteil erzielt, dass mit zunehmendem Lenkrad-Einschlag bzw. Drehwinkel der Schubweg überproportional, "progressiv" zunimmt, wie aus dem parabelartigen Verlauf im Lenkdiagramm gemäß Figur 17 erkennbar. So kann beispielsweise mit 0,625 Lenkradumdrehungen (jeweils nach rechts und links) bereits ein maximaler Lenkwinkel bis Anschlag von +/- 225 Grad erzielt werden. Mit der Erfindung lässt sich also eine Lenkung schaffen, die die notwendigen Lenkradumdrehungen von Anschlag links bis Anschlag rechts halbiert, wobei bei Geradeausfahrt und bei leichten Kurven die Lenkungsstabilität fast wie bekannt erhalten bleibt. Bei größeren Lenkwinkeln am Lenkrad werden progressiv größere Schubwege der Zahnstange erzeugt, so dass beim Rangieren oder Einparken die dazu notwendigen Lenkradumdrehungen praktisch halbiert werden. Der Fahrtkomfort lässt sich so beträchtlich erhöhen. Zur Erreichung kleiner Lenkkräfte am Lenkrad ist eine elektrische oder hydraulische Lenkunterstützung wie an sich bekannt zweckmäßig.

### Bezugszeichenliste

- 1: Getriebegehäuse
- 2: Zahnstange
- 2a: Lenkunterstützung
- e: Exzentrizität
- 3: Antriebsritzel
- 4: Druckstück
- 5: Feingewinde-Gegenhalter
- 6: Führungskolben
- 61: Aufnahmelöcher
- 62: Mittlere Längs-Symmetrieebene
- 63: Aufnahmeraum
- 64: Eintrittsaussparung
- 65: Mittlere Längsachse
- v: Versatz
- 66: Wandungs-Aussparungen
- 67: Durchgangsausnehmungen
- 7: Festlager
- 8: Loslager
- 9: Gleitfläche
- 10: Verzahnungsbereich
- 11: Gleitzapfen oder Haltevorsprung
- 12: Lagerzapfen oder Antriebsvorsprung
- 121: Drehachse
- H_{horizontal}: Auswanderungshub
- Hᵥₑᵣₜᵢₖₐₗ: Vertikalhub
- Z: Zahnstangenversatz
- 13: Lenkspindelzapfen
- 14: Gleitstück oder Haltestück
- 141: U-Schenkel
- 142: konkave Wölbung
- 143: Schmiernuten
- 15: Spindel-Kugellager
- 16: Flanschgehäuse
- 17: Gegenhalterdeckel
- 171: Schraublöcher
- 172: Innenseite
- 173: Innenvorsprung
- 174: Symmetrieachse
- 175: Mittlere Längsachse
- 18: Druckfeder
- 19: Faltenbalg
- 20: Lenkspindel
- 21: Kreuzgelenk
- 22: Schiebemuffe
- 23: Verbindungsschrauben
- M: Markierung

## Patentansprüche

1. Kraftfahrzeug-Lenkgetriebe mit Zahnstange (2) und damit in Eingriff stehendem Antriebsritzel (3), das zur Ankopplung einer Kraftfahrzeug-Lenkspindel (20) einen stirnseitig und exzentrisch zur Ritzelverzahnung (10) fest angebrachten Antriebsvorsprung (12) in einer Drehlagerung (7) aufweist, die in einer Richtung quer zur Zahnstange (2) und parallel zu einer von der Ritzelverzahnung (10) gebildeten Stirnebene geführt ist, so dass bei Ritzeldrehung für die Drehlagerung (7,8) Ausgleichshübe (Hᵥₑᵣₜᵢₖₐₗ) in Richtung quer zur Zahnstange (2) vorgegeben sind, die durch die exzentrische Anbringung des Antriebsvorsprungs (12) bedingt sind, und mit einem innerhalb eines Getriebegehäuses (1) geführten Haltestück (14), **gekennzeichnet durch** einen an der Antriebsritzel-Stirnseite konzentrisch zur Ritzelverzahnung (10) fest angebrachten, zylindrischen Haltevorsprung (11), der an seiner Stirnseite den exzentrischen Antriebsvorsprung (12) aufweist und drehbar in Eingriff steht mit dem Haltestück (14), das innerhalb des Getriebegehäuses (1) parallel zur Zahnstangen-Verzahnung geführt ist, und bei Ritzeldrehung für den Haltevorsprung (11) Ausgleichshübe (H_{horizontal}) parallel und mit konstantem Abstand zur Zahnstangen-Verzahnung vorgegeben sind, welche Ausgleichshübe (H_{horizontal}) durch die exzentrische Anbringung des Antriebsvorsprungs (12) bedingt sind.

2. Lenkgetriebe nach Anspruch 1, **dadurch gekennzeichnet, dass** das Getriebegehäuse (1) auf seiner dem Haltestück (14) gegenüberliegenden Innenseite einen Gegenhalteabschnitt, der insbesondere als Gleitfläche (9) ausgebildet ist, zur Parallelführung des Haltestücks (14) aufweist.

3. Lenkgetriebe nach Anspruch 2, **dadurch gekennzeichnet, dass** die dem Haltestück (14) gegenüberliegende Innenseite des Getriebegehäuses (1) als loser oder separater Gehäuse- oder Gegenhalterdeckel (17) mit dem innenseitigen Gegenhalteabschnitt ausgebildet ist, der vorzugsweise gegenüber der Deckelgrundfläche nach innen versetzt liegt

4. Lenkgetriebe nach Anspruch 1, 2 oder 3, **gekennzeichnet durch** eine beidseitige Anbringung von Haltevorsprüngen (11) an je einer Stirnseite des Antriebsritzels (3).

5. Lenkgetriebe nach Anspruch 1, 2, 3 oder 4, **dadurch gekennzeichnet, dass** das Haltestück (14) als loses, separat hergestelltes Gleitstück vorzugsweise mit U-artiger Grundform zum stirnseitigen Umgeben des Antriebsritzels (3) mit U-Schenkeln (141) ausgeführt ist, wobei ein oder zwei Schenkel des U-artigen Gleitstücks zum vorzugsweise formschlüssigen Gleiten auf je einem Haltevorsprung (11) vorzugsweise mit je einer konkav gewölbten Schenkel-Stirnkante (142) ausgebildet sind, wobei die Konkavität komplementär zum Haltevorsprung gestaltet ist.

6. Lenkgetriebe nach einem der vorangehenden Ansprüche, **dadurch gekennzeichnet, dass** die Ausgleichshübe (H_{horizontal}) des Antriebsvorsprungs (12) und der daran angekoppelten Lenkspindel (20), gegebenenfalls über ein Kreuzgelenk (21), mittels einer Schiebemuffe (22) aufnehmbar sind, worin die Lenkspindel (20) teleskopartig führbar ist.

7. Lenkgetriebe nach einem der vorangehenden Ansprüche, wobei das Antriebsritzel (3) ummantelt ist mit einer äußeren, konzentrischen Ritzelverzahnung (10), und mit einem zur Ankopplung einer Kraftfahrzeug-Lenkspindel (20) angeordneten oder ausgebildeten Antriebsvorsprung (12), der stirnseitig exzentrisch zur Ritzelverzahnung fest angebracht ist, mit einem oder mehreren, jeweils konzentrisch zur Ritzelverzahnung (10) stirnseitig fest angebrachten Haltevorsprüngen (11), wobei der oder der jeweilige Antriebsvorsprung (12) exzentrisch auf der Stirnseite des Haltevorsprungs (11) befestigt ist.

8. Lenkgetriebe nach einem der vorangehenden Ansprüche 1 bis 7, wobei das Antriebsritzel (3) ummantelt ist mit einer äußeren, konzentrischen Ritzelverzahnung (10), mit einem zur Ankopplung einer Kraftfahrzeug-Lenkspindel (20) angeordneten und/oder ausgebildeten, exzentrisch zur Ritzelverzahnung an einer Stirnseite fest angebrachten Antriebsvorsprung (12), **gekennzeichnet durch** einen an der anderen Stirnseite exzentrisch zur Ritzelverzahnung fest angebrachten Drehlagervorsprung oder Antriebsvorsprung (12), ausgebildet zur Aufnahme durch ein Drehlager (8).

9. Lenkgetriebe nach Anspruch 8, **dadurch gekennzeichnet, dass** der Antriebs- und der Lagervorsprung (12) in einer gemeinsamen Flucht parallel zur Mittel- oder Symmetrieachse der Ritzelverzahnung (10) liegen.

10. Lenkgetriebe nach einem der vorangehenden Ansprüche, **gekennzeichnet durch** eine Druckfederung (18), welche an einem Getriebegehäuses (1) abgestützt mit der der Drehlagerung (7) des Antriebsvorsprungs derart gekoppelt ist, dass die Druckfederung (18) das Antriebsritzel (3) mit seiner Ritzelverzahnung in den Verzahnungsbereich der Zahnstange (2) drückt und/oder den Ausgleichshüben (Hᵥₑᵣₜᵢᵢₖₐₗ) der Drehlagerung (7) entgegen wirkt zwecks Rückstellung des Antriebsritzels (3) in eine Ausgangs-Drehstellung.

11. Lenkgetriebe nach Anspruch 10, **dadurch gekennzeichnet, dass** die eine oder mehreren Drehlagerungen (7,8) in einem entsprechend den Ausgleichshüben (Hᵥₑᵣₜᵢᵢₖₐₗ) geführten Hubgehäuse oder Führungskolben (6) aufgenommen ist, und die Druckfederung (18) am Hubgehäuse oder Führungskolben (6) in Angriff gebracht ist.

12. Lenkgetriebe nach Anspruch 10 oder 11, **dadurch gekennzeichnet, dass** an der dem Antriebsvorsprung (12) gegenüberliegenden Stirnseite des Antriebsritzels (3) ein Drehlagervorsprung (12) exzentrisch zur Ritzelverzahnung (10) fest angebracht und gegebenenfalls in den Führungskolben (6) oder in einen separaten, entsprechend den Ausgleichshüben (Hᵥₑᵣₜᵢᵢₖₐₗ) geführten, zweiten Führungskolben aufgenommen ist.

13. Lenkgetriebe nach Anspruch 11 oder 11 und 12, **dadurch gekennzeichnet, dass** die Druckfederung (18) mehrere separate Druckfederelemente umfasst, die symmetrisch an einem Führungskolben (6) oder je einem der separaten Führungskolben angreifen.

14. Lenkgetriebe nach einem der Ansprüche 10 bis 13, **gekennzeichnet durch** eine vorzugsweise einstellbare Gegenhalterung (4,5), welche gegen eine dem Antriebsritzel (3) abgewandten Seite der Zahnstange (2) angreift.

15. Lenkgetriebe nach Anspruch 14, **dadurch gekennzeichnet, dass** die Gegenhalterung (4,5) eine Wandung eines Getriebegehäuses (1) von außen zugänglich durchsetzt und dabei zu ihrer Einstellbarkeit mit einem Wandungs-Innengewinde in Eingriff steht.

## Claims

1. A motor vehicle steering gear, comprising a gear rack (2) and a drive pinion (3) that meshes with said gear rack, which drive pinion has a drive projection (12) in a rotational bearing (7) for coupling a motor vehicle steering spindle (20), the drive projection being attached securely on the face side and eccentrically to the pinion teeth (10), the rotational bearing being guided in a direction transverse to the gear rack (2) and parallel to a front plane formed by the pinion teeth (10) so that when the pinion rotates, compensation strokes (H_{vertical}) are specified for the rotational bearing (7, 8) in the direction transverse to the gear rack (2), said compensation strokes being caused by the eccentric attachment of the drive projection (12) and comprising a retaining piece (14) guided within a gear housing (1), **characterised by** a cylindrical retaining projection (11) securely attached on the face side of the drive pinion concentrically to the pinion teeth (10), which retaining projection has on its face side the eccentric drive projection (12) and is rotatably in engagement with the retaining piece (14) which is guided within the gear housing (1) parallel to the gear rack teeth, and when the pinion rotates compensation strokes (H_{horizontal}) for the retaining projection (11) are set parallel and at a constant distance from the gear rack teeth, which compensation strokes (H_{horizontal}) are caused by the eccentric attachment of the drive projection (12).

2. The steering gear according to Claim 1, **characterised in that** the gear housing (1) has a counter holding section on its inside that is opposite the retaining piece (14), which counter holding section is formed in particular as a sliding surface (9) for the parallel guidance of the retaining piece (14).

3. The steering gear according to Claim 2, **characterised in that** the inside of the gear housing (1) opposite the retaining piece (14) is formed as a loose or separate housing cover or counter holder cover (17) with the inside counter holding section which is preferably positioned opposite the cover base area offset towards the inside.

4. The steering gear according to Claim 1, 2 or 3, **characterised by** a bilateral attachment of retaining projections (11) on each face side of the drive pinion (3).

5. The steering gear according to Claims 1, 2, 3 or 4, **characterised in that** the retaining piece (14) is made in the form of a loose, separately produced sliding piece, preferably with a basic shape in the form of a U to surround the face side of the drive pinion (3) with U-shaped side pieces (141), one or two side pieces of the U-shaped sliding piece each preferably being formed with a concavely curved side piece front edge (142) for preferably form-fitting sliding over each retaining projection (11), the concavity being configured to be complementary to the retaining projection.

6. The steering gear according to any of the preceding claims, **characterised in that** the compensation strokes (H_{horizontal}) of the drive projection (12) and the steering spindle (20) coupled onto it may optionally be picked up by means of a universal joint (21) using a sliding sleeve (22) in which the steering spindle (20) can be guided telescopically.

7. The steering gear according to any of the preceding claims, the drive pinion (3) being covered with external, concentric pinion teeth (10), and with a drive projection (12) which is arranged or formed for coupling to a motor vehicle steering spindle (20), which drive projection is securely attached eccentrically to the pinion teeth on the face side, with one or more retaining projections (11) each securely attached on the face side concentrically to the pinion teeth (10), the or the respective drive projection (12) being fastened eccentrically to the face side of the retaining projection (11).

8. The steering gear according to any of the preceding Claims 1 to 7, the drive pinion (3) being covered with external, concentric pinion teeth (10), with a drive projection (12) that is securely attached on one face side and that is concentrically arranged and/or formed eccentrically to the pinion teeth for coupling onto a motor vehicle steering spindle (20), **characterised by** a rotational bearing projection or drive projection (12) that is securely attached on the other face side eccentric to the pinion teeth, said rotational bearing projection or drive projection being formed to be held by a rotational bearing (8).

9. The steering gear according to Claim 8, **characterised in that** the drive projection and the bearing projection (12) lie commonly aligned parallel to the centre or symmetry axis of the pinion teeth (10).

10. The steering gear according to any of the preceding claims, **characterised by** a compression spring (18) which, supported on a gear housing (1), is coupled with the rotational bearing (7) of the drive projection such that the compression spring (18) presses the drive pinion (3) with its pinion teeth into the gear area of the gear rack (2) and/or counteracts the compensation strokes (H_{vertical}) of the rotational bearing (7) for the purpose of resetting the drive pinion (3) into an initial rotational position.

11. The steering gear according to Claim 10, **characterised in that** the one or more rotational bearings (7, 8) is or are received in a stroke housing or guide piston (6) guided correspondingly to the compensation strokes (H_{vertical}), and the compression spring (18) is applied on the stroke housing or the guide piston (6).

12. The steering gear according to Claim 10 or 11, **characterised in that** on the face side of the drive pinion (3) opposite the drive projection (12) a rotational bearing projection (12) is securely attached eccentrically to the pinion teeth (10) and may be received in the guide piston (6) or in a separate second guide piston that is guided correspondingly to the compensation strokes (H_{vertical}).

13. The steering gear according to Claim 11 or 11 and 12, **characterised in that** the compression spring (18) comprises a number of separate compression spring elements which symmetrically attach onto a guide piston (6) or onto one of each of the separate guide pistons.

14. The steering gear according to any of Claims 10 to 13, **characterised by** a preferably adjustable counterholder (4, 5) which attaches onto a side of the gear rack (2) facing away from the drive pinion (3).

15. The steering gear according to Claim 14, **characterised in that** the counterholder (4, 5) passes through a wall of a gear housing (1) that is accessible from the outside and is engaged here with an internal thread in the wall so that said counterholder can be adjusted.

## Revendications

1. Mécanisme de direction pour véhicule automobile, ayant une crémaillère (2) et un pignon d'entraînement (3) qui est engrené avec celle-ci, lequel pignon d'entraînement, pour coupler un arbre de direction de véhicule à moteur (20), comprend dans un palier de rotation (7) une projection d'entraînement (12) qui est rigidement fixée de façon frontale et excentrée par rapport aux dents de pignon (10), lequel palier de rotation est guidé dans une direction qui est perpendiculaire à la crémaillère et parallèle à une face frontale formée par les dents de pignon (10), de telle sorte que par la rotation du pignon des forces de compensation (H_{vertical}) sont produites pour les paliers de rotation (7, 8) dans la direction perpendiculaire à la crémaillère (2) du fait de la position excentrée de la projection d'entrainement (12), et ayant une pièce de retenue (14) guidée à l'intérieur d'un boitier de direction (1), **caractérisé par** une projection de retenue (11) cylindrique rigidement fixée sur la face frontale du pignon d'entrainement de façon concentrique par rapport aux dents de pignon (10) et comprenant sur sa face frontale la projection d'entrainement (12) excentrique, laquelle projection de retenue est solidaire en rotation avec la pièce de retenue (14) qui est guidée dans le boitier de direction (1) parallèlement aux dents de la crémaillère, et par la rotation du pignon des forces de compensation (H_{horizontal}) sont produites pour la projection de retenue (11) parallèlement et avec un écart constant par rapport aux dents de la crémaillère, lesdites forces de compensation (H_{horizontal}) sont provoquées par la fixation excentrique de la projection d'entraînement (12).

2. Mécanisme de direction selon la revendication 1, **caractérisé en ce que** le boîtier de direction (1) comprend un élément de butée sur sa face intérieure opposée à la pièce de retenue (14), ledit élément de butée étant en particulier conformé en guidage latéral (9) pour le guidage parallèle de la pièce de retenue (14).

3. Mécanisme de direction selon la revendication 2, **caractérisé en ce que** le côté intérieur du boîtier de direction (1) opposé à la pièce de retenue (14) est réalisé sous forme de boîtier de couverture ou de couvercle (17) de couverture libre ou séparé comprenant l'élément de butée sur sa face intérieure, lequel est de préférence déporté vers l'intérieur par rapport à la paroi de base du couvercle.

4. Mécanisme de direction selon l'une des revendications 1, 2 ou 3, **caractérisé par** une fixation bilatérale des projections de retenue (11) sur chaque face frontale du pignon d'entraînement (3).

5. Mécanisme d'entraînement selon l'une des revendications 1, 2, 3 ou 4, **caractérisé en ce que** la pièce de retenue (14) est réalisé de préférence sous forme d'un bloc coulissant libre fabriqué séparément avec une forme de base en forme de U pour entourer la face frontale du pignon d'entraînement (3) par les jambes du U (141), dans lequel l'une ou les deux jambes du bloc coulissant en forme de U sont de préférence formées pour réaliser un glissement sur chaque projection de retenue (11) avec chacune une arête d'extrémité de jambe (142) à forme concave, dans lequel la concavité est complémentaire de la projection de retenue.

6. Mécanisme d'entraînement selon l'une quelconque des revendications précédentes, **caractérisé en ce que** les forces de compensation (H_{horizontal}) de la projection d'entraînement (12) et la broche de direction (20) couplée sur celle-ci peuvent être optionnellement saisies au moyen d'un joint universel (21) en utilisant une douille coulissante (22), dans lequel la broche de direction (20) peut être guidée de façon télescopique.

7. Mécanisme d'entraînement selon l'une quelconque des revendications précédentes, dans lequel le pignon d'entraînement (3) est recouvert avec des dents de pignon externes concentriques (10), et avec une projection d'entraînement (12) qui est agencée ou formée pour le couplage à une broche de direction (20) de véhicule à moteur, ladite projection de direction étant rigidement fixée frontalement et de façon excentrique par rapport aux dents de pignon (10), avec une ou plusieurs projections de retenue (11) qui sont chacune rigidement fixée frontalement et de façon concentrique par rapport aux dents de pignon (10), dans lequel la ou chacune des projections d'entraînement (12) est fixée de façon excentrique à la face frontale de la projection de retenue (11).

8. Mécanisme de direction selon l'une quelconque des revendications précédentes 1 à 7, dans lequel le pignon d'entraînement (3) est recouvert avec des dents de pignon (10) externes concentriques, avec une projection d'entraînement (12) qui est agencée et/ou formée pour le couplage à une broche de direction (20) de véhicule à moteur et qui est rigidement fixée à une face frontale de façon excentrique par rapport aux dents du pignon, **caractérisé par** une projection de rotation ou une projection d'entraînement (12), qui est rigidement fixée à l'autre face frontale de façon excentrique par rapport aux dents du pignon, et qui est conçue pour s'engager dans un palier de rotation (8).

9. Mécanisme de direction selon la revendication 8, **caractérisé en ce que** la projection d'entraînement ou la projection de tenue (12) sont disposées en alignement commun et parallèlement à l'axe central ou de symétrie des dents de pignon (10).

10. Mécanisme de direction selon l'une quelconque des revendications précédentes, **caractérisé par** un ressort de compression (18), qui est supporté sur un boîtier de direction (1) et qui est couplé avec le palier de rotation (7) de la projection d'entraînement de telle sorte que le ressort de compression (18) presse le pignon d'entraînement (3) avec ses dents de pignon dans la zone dentée de la crémaillère (2) et/ou agit à l'encontre des forces de compensation (H_{vertical}) du palier de rotation (7) dans le but de ramener le pignon d'entraînement (3) dans une position de rotation initiale.

11. Mécanisme de direction selon la revendication 10, **caractérisé en ce que** lesdits un ou plusieurs paliers de rotation (7, 8) sont disposés dans un logement de guidage ou piston de guidage (6) correspondant aux forces de compensation (H_{vertical}), et **en ce que** le ressort de compression (18) est en prise sur le logement de guidage ou piston de guidage (6).

12. Mécanisme de direction selon l'une des revendications 10 ou 11, **caractérisé en ce que**, sur la face frontale du pignon d'entraînement (3) qui est à l'opposé de la projection d'entraînement (12), une projection de palier de rotation (12) est rigidement fixée de façon excentrique par rapport aux dents de pignon (10) et peut être engagée dans le piston de guidage (6) ou dans un second piston de guidage séparé qui est guidé en correspondance avec les forces de compensation (H_{vertical}).

13. Mécanisme de direction selon l'une des revendications 11 ou 11 et 12, **caractérisé en ce que** le ressort de compression (18) comprend plusieurs éléments de ressort de compression séparés, qui sont en prise symétriquement sur un piston de guidage (6) ou sur chacun de plusieurs pistons de guidage séparés.

14. Mécanisme de direction selon l'une quelconque des revendications 10 à 13, **caractérisé par** une pièce de retenue ajustable (4, 5), qui agit sur un côté de la crémaillère (2) qui est orienté à l'opposé du pignon d'entraînement (3).

15. Mécanisme de direction selon la revendication 14, **caractérisé en ce que** la pièce de retenue (4, 5) pénètre dans une paroi du boîtier de direction (1) qui est accessible depuis l'extérieur et pour cela s'engage avec un filet interne dans la paroi de façon à pouvoir être ajustée.
